# EUROPEAN PATENT APPLICATION

(11) **EP 1 359 525 A1**
(43) Date of publication of application: **05.11.2003**
(21) Application number: 02711339.8
(22) Date of filing: 06.02.2002
(51) Int. Cl.: G06F 17/60

(54) **DEVICE FOR INTEGRATING TRANSACTION INFORMATION ON FINANTIAL TRANSACTION**

(30) Priority: 09.02.2001 JP 2001034710
(71) Applicant: Sony Corporation, Tokyo 141-0001 (JP)
(72) Inventor: YOSHIOKA, Shinsuke, SONY CORPORATION, Shinagawa-ku, Tokyo 141-0001 (JP); ASANO, Motoshi, SONY CORPORATION, Shinagawa-ku, Tokyo 141-0001 (JP); SAKAMOTO, Masami, SONY CORPORATION, Shinagawa-ku, Tokyo 141-0001 (JP); ANNO, Tetsuya, SONY CORPORATION, Shinagawa-ku, Tokyo 141-0001 (JP)
(74) Representative: Pilch, Adam John Michael
(86) International application number: JP0200976
(87) International publication number: WO02065365

(57) **Abstract**

A transaction information consolidating apparatus is disclosed which consolidates cash flow information associated with as many as several hundred thousand transactions per day into data which can be dealt with by a risk management system. A transaction information consolidating apparatus (1) acquires transaction information from a transaction information storage apparatus (2). On the basis of the acquired transaction information, the transaction information consolidating apparatus (1) produces expanded records indicating amounts of movements of money. The transaction information consolidating apparatus (1) then groups the expanded records in accordance with a predetermined consolidation rule, produces a consolidated record from a plurality of expanded records of each group, and supplies consolidated data including a set of expanded records to a risk management system (3).

## Description

### Technical Field

The present invention relates to an apparatus and method for consolidating transaction information associated with a financial transaction, a storage medium in which a program for practicing such an apparatus is stored, and a storage medium in which a program for practicing such a method is stored. More specifically, the present invention relates to a technique for acquiring transaction information from an apparatus in which transaction information associated with financial transactions is stored, producing expanded data indicating cash flows on the basis of the acquired data, consolidating the expanded data in accordance with a predetermined consolidation rule, and supplying the resultant consolidated data clearly indicating the cash flows to a risk management system.

### Background Art

In recent years, financial liberalization, internationalization, and computerization are increasingly advancing. Although this is beneficial to banks in that banks can have expanded business chances, the problem is in that banks can meet a great risk, which did not occur in old-day bank management and which may result in a very serious influence on bank management. Thus, in management of banks, risk management is a very important theme which is now being discussed widely by various persons in relating governmental and nongovernmental institutions.

Risks in bank management can be classified in various ways. However, regardless of the manner of classification, major risks are an interest rate risk (a risk of a change in interest or asset value caused by a change in interest rate), a liquidity risk (a risk of a cash crisis caused by a wrong time of disbursement/reception of a fund or caused by imbalance between disbursement and reception), and an exchange risk (a risk of a change in the yen-base value of a fund or a debt caused by a change in an exchange rate).

To manage such risks by analyzing cash flows, estimating the degree of a risk, and making a calculation associated with hedge, risk management systems for assisting in business judgment are used in many financial institutions.

In a case where a risk management system is used to manage exchange transactions or financing transactions, information about large-amount cash flows of a rather small number of transactions is supplied to the risk management system, and the system can precisely perform risk management on the basis of supplied information. However, in retail transactions with customers such as a deposit transaction, a very large number of transactions are performed, although the amount of money in each transaction is small. Because of a limitation in capacity of hardware, the system cannot deal with such a large number of transactions, and thus, in the case of retail transactions, information about cash flows supplied to the risk manage system is based on experience of a human operator and is not precise enough for the risk management.

It is an object of the present invention to provide a technique of consolidating information about cash flows associated with as many as, for example, several hundred thousand transactions into data which can be dealt with by a risk management system.

### Disclosure of Invention

The above object is achieved by the present invention having the following features.

### (Aspect according to Claim 1)

In an aspect of the present invention according to Claim 1, transaction information is acquired from a transaction information storage apparatus; expanded records indicating an amount of a monetary movement is produced on the basis of the transaction information; the expanded records are grouped in accordance with a predetermined consolidation rule; and a consolidated record is produced from a plurality of expanded records of each group.

Herein, the amount of a monetary movement refers to an amount of a principal deposited or withdrawn, an amount of interest paid, or a change in an outstanding loan balance.

An expanded record indicating the amount of the monetary movement is produced each time a monetary movement occurs, so that the monetary movement (cash flow) is precisely reflected in the expanded record. By consolidating expanded records into a consolidated record in accordance with a predetermined consolidation rule, it is possible to reduce the number of records supplied to the risk management system, and thus the amount of data supplied to the risk management system is reduced.

### (Aspect according to Claim 2)

In an aspect of the present invention according to Claim 2, there is provided a transaction information consolidating unit for each ledger file stored in the transaction information storage apparatus, wherein each transaction information consolidating unit has a consolidation rule predetermined depending on a feature of a financial product stored in a corresponding ledger file.

In general, financial institutions deal with various kinds of financial products, and cash flows occurs in respective financial products. The conditions and contents of cash flows vary depending on the type of financial products Thus, in the present invention, there are provided consolidating units adapted to the respective financial products, thereby making it possible to deal with risks of all financial products provided by a financial institution.

### (Aspect according to Claim 3)

In an aspect of the present invention according to Claim 3, the transaction information consolidating unit includes transaction information expanding means for producing expanded records in which a movement date and a movement amount of at least one of a principal, interest, and an outstanding balance are described; and transaction information consolidating means for producing a consolidated record by grouping the expanded records in accordance with a consolidation rule, and summing up the grouped expanded records in terms of at least one of items including a principal, interest, and an outstanding balance.

In the present aspect of the invention, because each expanded record includes data indicating an amount of movement of at least one of a principal, interest, and an outstanding balance and also includes data indicating a date of occurrence thereof, it is possible to precisely know the amount of cash flow of each day.

Furthermore, because the consolidation is performed in accordance with a consolidation rule properly determined depending on the feature of a financial product dealt with, the consolidated data supplied to the risk management system indicates the precise amount of cash flow of each day.

### (Aspect according to Claim 6)

In an aspect of the present invention according to Claim 6, there is provided a method comprising an expanded record producing step of acquiring transaction information from the transaction information storage apparatus and producing an expanded record on the basis of the acquired transaction information so as to indicate a change in at least one of a principal, interest, and an outstanding balance; and a consolidated record producing step of grouping expanded records in accordance with a predetermined consolidation rule and producing one consolidated record from a plurality of expanded records of the same group.

Herein, the amount of a monetary movement refers to an amount of a principal deposited or withdrawn, an amount of interest paid, or a change in an outstanding loan balance.

An expanded record indicating the amount of the monetary movement is produced each time a monetary movement occurs, so that the monetary movement (cash flow) is precisely reflected in the expanded record. By consolidating expanded records into a consolidated record in accordance with a predetermined consolidation rule, it is possible to reduce the number of records supplied to the risk management system, and thus the amount of data supplied to the risk management system is reduced.

### Brief Description of the Drawings

Fig. 1 is a block diagram showing a transaction information consolidating apparatus according to the present invention.
Fig. 2 is a block diagram showing an example of the construction of a transaction information consolidating apparatus according an embodiment of the present invention.
Fig. 3 is a block diagram showing an example of the construction of an ordinary deposit transaction information consolidating unit.
Fig. 4 is a diagram showing an example of a format of an ordinary deposit ledger file.
Fig. 5 is a diagram showing an example of a scenario of ordinary deposit transactions.
Fig. 6 is a diagram showing expanded ordinary deposit data.
Fig. 7 is a diagram showing consolidated ordinary deposit data.
Fig. 8 is a diagram showing expanded ordinary deposit data.
Fig. 9 is a diagram showing consolidated ordinary deposit data.
Fig. 10 is a diagram showing expanded ordinary deposit data.
Fig. 11 is a diagram showing consolidated ordinary deposit data.
Fig. 12 is a diagram showing expanded ordinary deposit data.
Fig. 13 is a diagram showing consolidated ordinary deposit data.
Fig. 14 is a diagram showing expanded ordinary deposit data.
Fig. 15 is a diagram showing consolidated ordinary deposit data.
Fig. 16 is a diagram showing expanded ordinary deposit data.
Fig. 17 is a diagram showing consolidated ordinary deposit data.
Fig. 18 is a block diagram showing an example of the construction of a time deposit transaction information consolidating unit.
Fig. 19 is a bock diagram showing an example of the construction of TDTI expanding means and TDTI consolidating means.
Fig. 20 is a diagram showing an example of a format of a record of a time deposit ledger file.
Fig. 21 is a diagram showing a scenario of an example of time deposit transactions.
Fig. 22 is a diagram showing expanded time deposit data.
Fig. 23 is a diagram showing consolidated time deposit data.
Fig. 24 is a diagram showing expanded time deposit data.
Fig. 25 is a diagram showing consolidated time deposit data.
Fig. 26 is a diagram showing expanded time deposit data.
Fig. 27 is a diagram showing consolidated time deposit data.
Fig. 28 is a diagram showing expanded time deposit data.
Fig. 29 is a diagram showing consolidated time deposit data.
Fig. 30 is a diagram showing expanded time deposit data.
Fig. 31 is a diagram showing consolidated time deposit data.
Fig. 32 is a diagram showing expanded time deposit data.
Fig. 33 is a diagram showing consolidated time deposit data.
Fig. 34 is a block diagram showing an example of the construction of an exchange reservation information processing means.
Fig. 35 is a diagram showing an example of a scenario of time deposit transactions.
Fig. 36 is a diagram showing an example of a content of data acquired by an exchange reservation data receiving unit from a time deposit ledger file.
Fig. 37 is a diagram showing calculations performed by a purchase/selling amount calculation unit.
Fig. 38 is a diagram showing an example of consolidated exchange reservation information produced by the purchase/selling amount calculation unit.
Fig. 39 is a diagram showing an example of consolidated exchange reservation information produced by the purchase/selling amount calculation unit.
Fig. 40 is a diagram showing an example of consolidated exchange reservation information produced by the purchase/selling amount calculation unit.
Fig. 41 is a diagram showing an example of consolidated exchange reservation information produced by the purchase/selling amount calculation unit.
Fig. 42 is a block diagram showing an example of the construction of a card loan transaction information consolidating unit.
Fig. 43 is a diagram showing an example of a scenario of card loan transactions.
Fig. 44 is a conceptual diagram showing an example of transaction information stored in a card load ledger file.
Fig. 45 is a diagram showing an example of expanded card loan data.
Fig. 46 is a diagram showing an example of consolidated card loan data.
Fig. 47 is a conceptual diagram showing an example of transaction information stored in a card load ledger file.
Fig. 48 is a diagram showing an example of expanded card loan data.
Fig. 49 is a diagram showing an example of consolidated card loan data.
Fig. 50 is a conceptual diagram showing an example of transaction information stored in a card load ledger file.
Fig. 51 is a diagram showing an example of expanded card loan data.
Fig. 52 is a diagram showing an example of consolidated card loan data.
Fig. 53 is a block diagram showing an example of the construction of a specific-purpose/housing loan transaction information consolidating unit.
Fig. 54 is a block diagram showing an example of the construction of the specific-purpose loan transaction information expanding means.
Fig. 55 is a block diagram showing an example of the construction of the housing loan transaction information expanding means.
Fig. 56 is a diagram showing an example of a scenario of specific-purpose/housing loan transactions.
Fig. 57 is a diagram showing contents of loan accounts according to the scenario shown in Fig. 56.
Fig. 58 is a diagram showing expanded fixed-interest-rate data.
Fig. 59 is a diagram showing expanded varying-interest-rate data.
Fig. 60 is a diagram showing expanded fixed-interest-rate data.
Fig. 61 is a diagram showing expanded varying-interest-rate data.
Fig. 62 is a diagram showing expanded cap data.
Fig. 63 is a diagram showing an example of consolidated data produced by cap data consolidating means.
Fig. 64 is a diagram showing consolidated fixed-interest-rate data produced by consolidated fixed-interest-rate data merging means and supplied to a risk management system.
Fig. 65 is a diagram showing consolidated varying-interest-rate data produced by consolidated varying-interest-rate data merging means and supplied to the risk management system.

### Best Mode for Carrying Out the Invention

Embodiments of the present invention are described below with reference to the accompanying drawings.

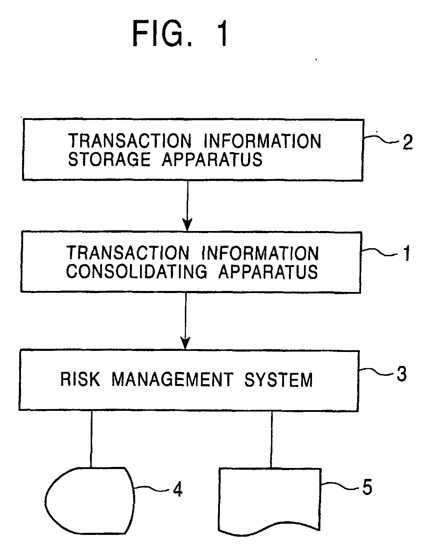

Fig. 1 is a block diagram showing a transaction information consolidating apparatus according to the present invention. The transaction information consolidating apparatus 1 is an information apparatus such as a computer or a work station, which is connected to a risk management system and a transaction information storage apparatus 2 generally including a transaction information file so that the transaction information consolidating apparatus 1 can acquire transaction information from the transaction information storage apparatus 2. The transaction information consolidating apparatus serves to consolidate transaction information stored in the transaction information storage apparatus 2 and supplying the consolidated information to the risk management system 3. The information processing apparatus acting as the transaction information consolidating apparatus 1 is not necessarily needed to be formed in a physically single piece of apparatus. Instead, each component may be realized by one information processing apparatus so that the total system including those components function as the transaction information consolidating apparatus 1.

The transaction information storage apparatus 2 may include a file copied from a transaction information file in the accounting system. More specifically, at the end of transaction of each day, the content of the transaction information file may be copied, by means of batch processing or online processing, into the file stored in the transaction information storage apparatus 2. In the case where the transaction information storage apparatus 2 includes a file copied from a transaction information file in the accounting system, the copied file is not necessarily needed to be connected online or in real time to the original transaction information file in the accounting system, but copying may be performed at intervals properly determined so that the copied file can be used in the risk management. For example, copying of the file may be performed once every day by means of batch processing. The copied file does not necessarily need to include all items of the original transaction information file, but the copied file may include only items necessary for the risk management.

In the present description, the term "transaction information" is used to describe information about a monetary transaction. Specific examples include information about various kinds of deposit transactions and information about various kinds of loan transactions. The "transaction information file" refers to a file in which transaction information is stored in a readable/rewritable fashion. Specific examples of transaction information files include an ordinary deposit ledger file, a time deposit ledger file, and various loan ledger files, used in a bank system.

The "risk management system" refers to a system for managing a risk, such as an interest rate risk, a liquidity risk, or an exchange risk, which can occur in an operation of a financial institution. A specific example of the risk management system is TSSummit available from Summit Inc., in USA. By processing transaction information in a consolidated form supplied from the transaction information consolidating apparatus 1 and other transaction information the risk management system 3 produces risk management information such as information for use in determination of various interest rates or information indicating simulated risks. The resultant risk management information is supplied to a user via a display 4 or a printer 5.

The transaction information consolidating apparatus 1 produces consolidated transaction information for use in risk management from transaction information stored in a transaction information storage apparatus 2 and supplies the resultant consolidated transaction information to the risk management system, More specifically, transaction information is acquired from the transaction information storage apparatus 2, and expanded records are produced on the basis of the acquired transaction information so as to indicate cash movements which occur on a consolidation reference date (a date on which the transaction information consolidating apparatus performs consolidation or a date specified via an input device which is not shown in the figure) and cash flows which will occur after the consolidation reference date. The expanded records are then grouped in accordance with a predetermined rule, and one consolidated record is produced from a plurality of expanded records of each group. Because the transaction information consolidating apparatus 1 produces a consolidated record precisely reflecting the information included in one or more expanded records, precise information is supplied to the risk management system, although the number of records or the amount of data supplied to the risk management system is reduced.

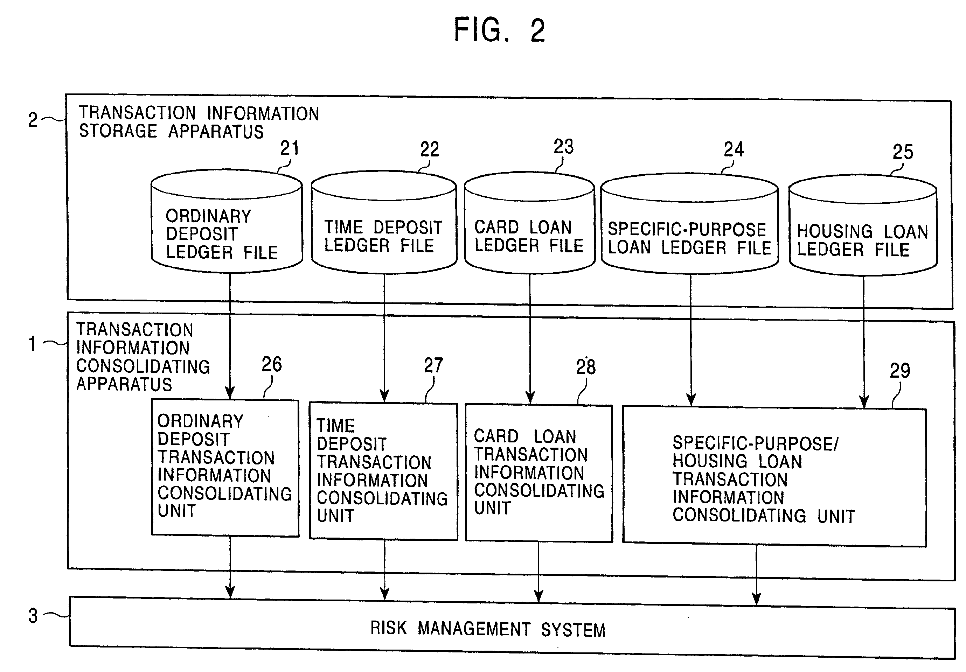

Fig. 2 is a block diagram showing an example of the construction of the transaction information consolidating apparatus 1. As shown in Fig. 2, the transaction information storage apparatus 2 has transaction information files associated with various financial products, including an ordinary deposit ledger file 21, a time deposit ledger file 22, a card load ledger file 23, a specific-purpose load ledger file 24, and a housing load ledger file 25.

The transaction information consolidating apparatus 1 includes an ordinary deposit transaction information consolidating unit 26 a time deposit transaction information consolidating unit 27, a card loan transaction information consolidating unit 28, and a specific-purpose/housing loan transaction information consolidating unit 29. The ordinary deposit ledger file 21 is connected to the ordinary deposit transaction information consolidating unit 26, the time deposit ledger file 22 to the time deposit transaction information consolidating unit 27, the card load ledger file 23 to the card loan transaction information consolidating unit 28, and the specific-purpose load ledger file 24 and the housing load ledger file 25 to the specific-purpose/housing loan transaction information consolidating unit 29. The respective transaction information consolidating units 26 to 29 supply consolidated data of financial products associated with the respective ledger files to the risk management system 3.

One transaction information consolidating unit is provided for each ledger file so as to properly deal with differences among financial products in the condition and the manner in which cash flows occur. From transaction information stored in the corresponding transaction information file, The transaction information consolidating units are similar to each other in that they generate consolidated information from the transaction information stored in the corresponding transaction information files and supply the resultant consolidated information to the risk management system 3 so that the risk management system 3 can use it in the risk management. However, some parts are different for each transaction information consolidating unit, so that expanded data can be produced and consolidated in a proper manner depending on the financial product. The construction and the operation are described below for each transaction information consolidating unit.

### (1. Ordinary deposit transaction information consolidating unit)

### (1.1 Example of construction)

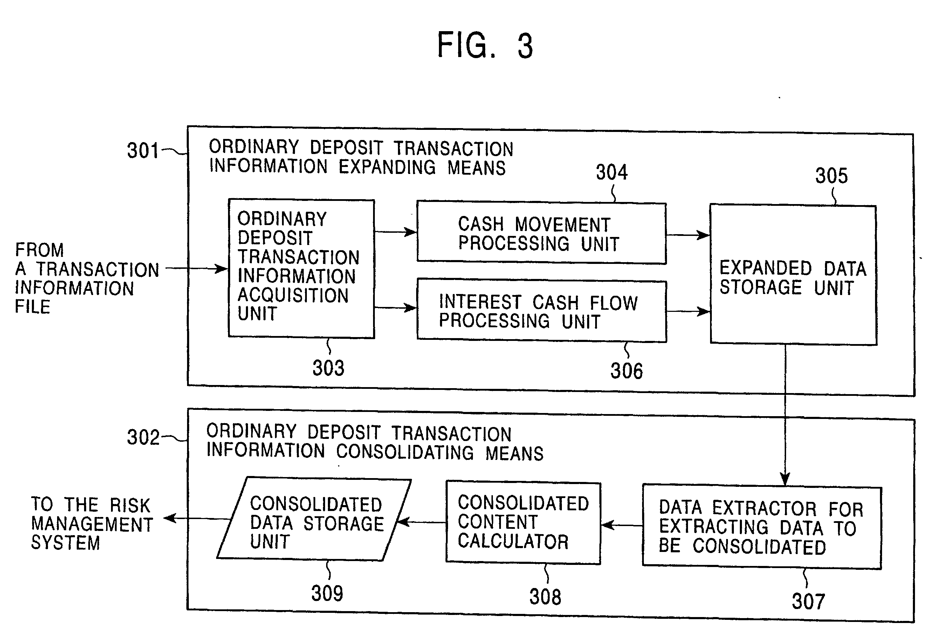

Fig. 3 is a block diagram illustrating an example of the construction of the ordinary deposit transaction information consolidating unit 26 connected to the ordinary deposit ledger file 21. As shown in Fig. 3, the ordinary deposit transaction information consolidating unit 26 includes ordinary deposit transaction information expanding means 301 and ordinary deposit transaction information consolidating means 302.

The ordinary deposit transaction information expanding means 301 includes an ordinary deposit transaction information acquisition unit 303 connected to the ordinary deposit ledger file 21, a cash movement processing unit 304 and an interest cash flow processing unit 306 both connected to the ordinary deposit transaction information acquisition unit 303, and an expanded ordinary deposit data storage unit 305 connected to the cash movement processing unit 304 and the interest cash flow processing unit 306.

The ordinary deposit transaction information acquisition unit 303 acquires data needed for calculation of monetary movement from the ordinary deposit ledger file 21 on a record-by-record basis.

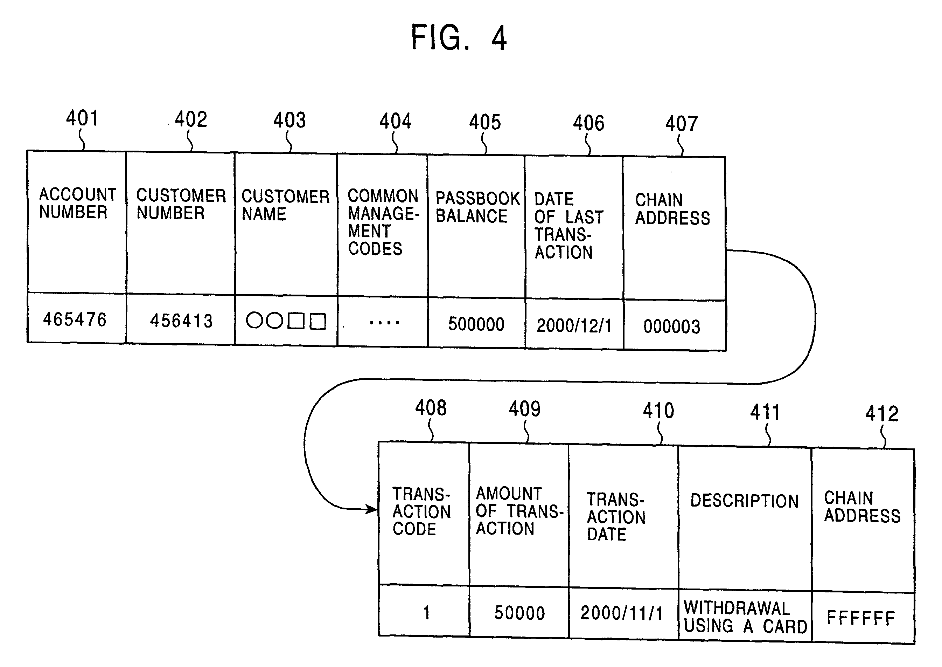

Fig. 4 shows an example of a format of a record of the ordinary deposit ledger file 21. This record includes an account number field 401, a customer number field 402, a customer name field 403, a common management code field 404, a passbook balance field 405, a last transaction date field 406, a chain address field 407, a transaction code field 408, an amount-of-transaction field 409, a transaction date field 410, a description field 411, and a chain address field 412. In this format, the outstanding balance of an ordinary deposit account corresponding to this record is described in the passbook balance field 405, and a code indicating the type of transaction, such as depositing, withdrawal, or interest payment, into/from this ordinary deposit account is described in the transaction code field 408. Furthermore, the amount of the transaction is described in the amount-of-transaction field 409, and the data of the transaction is described in the transaction date field In the chain address 412, an address of a next record is stored. Each time a transaction is performed, a chain address field 412 is created from the transaction code field 408, and records are chained together so as to form one record.

The ordinary deposit transaction information acquisition unit 303 acquires data, needed to calculate the movement of money, from for example the passbook balance field 405, the last transaction date field 406, the transaction code field 408, the amount-of-transaction field 409, and the transaction date field 410.

On the basis of the data acquired by the ordinary deposit transaction information acquisition unit 303, the cash movement processing unit 304 produces an expanded record for each record of the ordinary deposit ledger file 21 to indicate movements of a principal and interest which occur on the processing reference date.

On the other hand, on the basis of the data acquired by the ordinary deposit transaction information acquisition unit 303, the interest cash flow processing unit 306 calculates the interest to be paid on the next interest payment date for each record of the ordinary deposit ledger file 21 and describes the result in the expanded record. The resultant record is supplied to the expanded ordinary deposit data storage unit 305.

Upon receiving the expanded data from the cash movement processing unit 304 and the interest cash flow processing unit 306, the expanded ordinary deposit data storage unit 305 stores the received records as expanded ordinary deposit data. The expanded ordinary deposit data is a complete set of expanded ordinary deposit transaction information records produced by the ordinary deposit transaction information expanding means 301 by processing all records of the ordinary deposit ledger file 21.

The ordinary deposit transaction information consolidating means 302 includes an information-to-be-consolidated extracting unit 307 connected to the expanded ordinary deposit data storage unit 305, a consolidated-content calculation unit 308 connected to the information-to-be-consolidated extracting unit 307, and a consolidated ordinary deposit data storage unit 309 connected to the consolidated-content calculation unit 308.

When the expanded ordinary deposit data has been produced, the information-to-be-consolidated extracting unit 307 extracts, from the expanded ordinary deposit data stored in the expanded ordinary deposit data storage unit 305, records that can be consolidated into groups. In the ordinary deposit transaction information consolidating unit 26, "consolidation" is performed such that records having the same date of occurrence of cash flow (such as a date of movement of a principal or interest, or a date of interest payment) and the same currency type (yen, U.S. dollar, or euro) are grouped together and stored into one record. The consolidation can be performed, for example, by sorting the expanded records using the date of occurrence of cash flow and the currency type as keys and grouping the sorted records such that records which are different in the date of occurrence of cash flow or the currency type fall into different groups.

If the consolidated-content calculation unit 308 receives the grouped records from the information-to-be-consolidated extracting unit 307, the consolidated-content calculation unit 308 calculates the sum of the amounts of movement of principals, the sum of movement of interests, and the next date on which interests to be paid for each group, and stores the calculated sums for each group into one consolidated record. The resultant consolidated records are supplied to the consolidated ordinary deposit data storage unit 309. As for records that cannot be grouped, one consolidated record is produced for each such expanded record without calculating the sums, and the resultant consolidated records are supplied to the consolidated ordinary deposit data storage unit 309.

When the consolidation is completed for all records, consolidated ordinary deposit data including a complete set of consolidated records is obtained. The consolidated ordinary deposit data storage unit 309 stores the obtained consolidated ordinary deposit data and supplies the stored consolidated ordinary deposit data to the risk management system 3.

Preferably, the consolidated records are produced in a format that satisfies the specifications of the risk management system 3. In the case where the format of the consolidated ordinary deposit data does not satisfy the specifications, the consolidated ordinary deposit data is supplied to the risk management system 3 after converting the format via interface means (not shown) into a format that satisfies the specifications of the risk management system 3.

### (1.2) Example of Operation

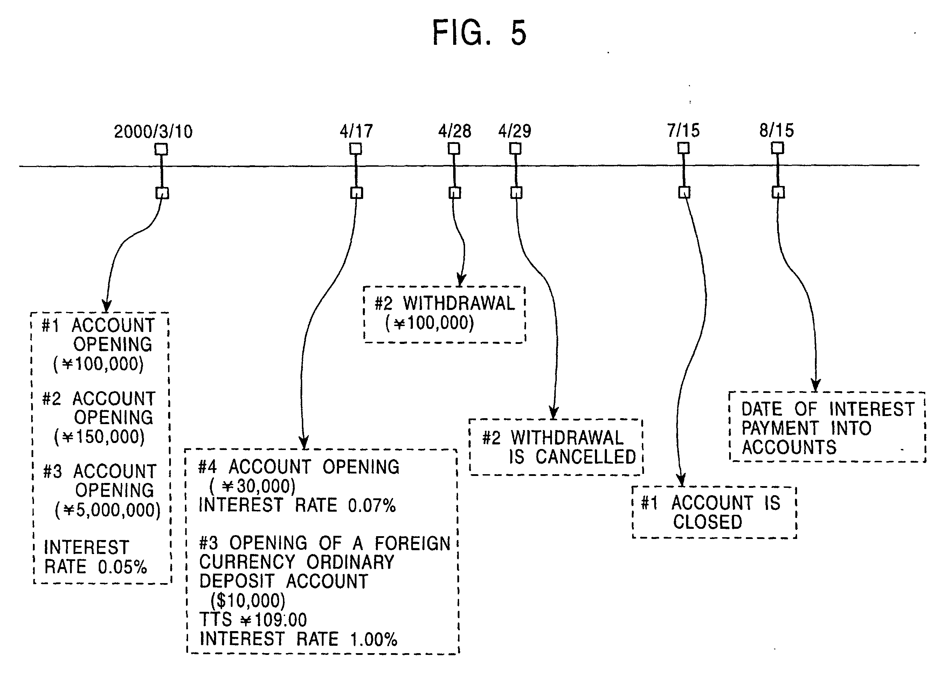

Referring to an ordinary deposit transaction scenario shown in Fig. 5, an example of the operation of the ordinary deposit transaction information consolidating unit 26 is described below.

Fig. 5 is a diagram showing the ordinary deposit transaction scenario. In this scenario, on March 10, 2000, new accounts #1, #2, and #3 are opened, and 100,000 yen, 150,000 yen, and 5,000,000 yen are deposited into the respective accounts #1, #2, and #3. Contracted annual interest rates applied to those accounts are 0.05%. Thereafter, on April 17, a new account #4 is opened and 80,000 yen is deposited. On the same day, 10,000 U.S. dollars are purchased from the account #3 and deposited as foreign-currency ordinary deposit. In the above purchasing of U.S. dollars, exchange from yen to dollars is performed at a rate of 109.00 yen/dollar. On April 28, 100,000 yen is withdrawn from the account #2. However, this withdrawal is cancelled on the next day, that is, April 29. On July 15, the account #1 is cancelled. An interest payment date is arrived at on August 15, interests are paid into all accounts.

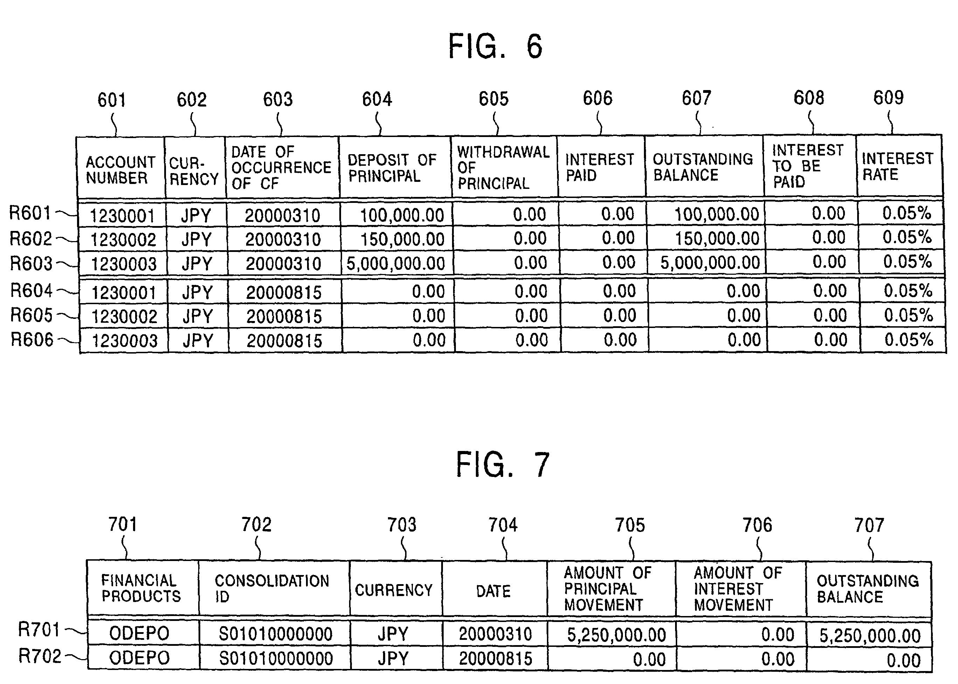

Fig. 6 shows expanded ordinary deposit data which is stored, as of March 10, 2000, in the expanded ordinary deposit data storage unit 305 after being processed by the cash movement processing unit 304 and the interest cash flow processing unit 306. Fig. 7 shows consolidated ordinary deposit data which is stored, as of the same day, in the consolidated ordinary deposit data storage unit 309 after being consolidated from the expanded ordinary deposit data.

In this example, the expanded ordinary deposit data includes expanded records R601, R602, R603, R604, R605, and R606, and each record includes an account number field 601, a currency type field 602, a CF occurrence date field 603, a deposited principal field 604, a withdrawn principal field 605, a paid interest field 606, an outstanding balance field 607, an interest-to-be-paid field 608, and interest rate field 609.

The consolidated ordinary deposit data shown in Fig. 7 includes consolidated records R701 and R702, and each consolidated record includes a financial product field 701, a consolidation ID field 702, a currency type field 703, a date field 704, a principal movement field 705, interest movement field 706, and an outstanding balance field 707. In the financial product field, there is described a code identifying a corresponding financial product. The consolidation ID is an identifier identifying the consolidated ordinary deposit data.

The expanded ordinary deposit data shown in Fig. 6 is produced as follows.

First, the ordinary deposit transaction information acquisition unit 303 acquires data from the ordinary deposit ledger file 21 including the records associated with the accounts #1 and #3. From data described in the transaction code field 408, the amount-of-transaction field 409, and the transaction date field 410 (Fig. 4) of the acquired data, the cash movement processing unit 304 determines that accounts #1 to #3 were opened and money was deposited thereinto on March 10, and produces expanded records R601, R602, and R603 on the basis of the data.

In the account number field, the currency type field, the CF occurrence date field, and the interest rate field of each expanded record, the data acquired by the ordinary deposit transaction information acquisition unit 303 are stored.

The amount of deposit into each account is stored in the deposited principal field 604 and the outstanding balance field 607 of each corresponding record.

The ordinary deposit transaction information acquisition unit 303 determines whether data should be described into the paid interest field 606 and the interest-to-be-paid field 608. In this specific example, it is determined that description of data is unnecessary, and thus expanded records R601, R602, and R603 are produced without describing data into these fields.

On the other hand, the interest cash flow processing unit 306 determines, from the data acquired via the ordinary deposit transaction information acquisition unit 303, that the accounts described above were opened on March 10, and produces expanded records R604, R605, and R606. In this case, the deposit period is 0 days, and thus 0 yen is described in the interest field of each record.

As a result, the expanded ordinary deposit data shown in Fig. 6 is stored in the expanded ordinary deposit data storage unit 305. Values described in the fields of the expanded records to indicate the movement of money, such as a principal, are positive when a bank receives money but values are negative when money is withdrawn from the bank.

Thereafter, the ordinary deposit transaction information expanding means 301 commands the ordinary deposit transaction information consolidating means 302 to start processing. If the ordinary deposit transaction information consolidating means 302 receives the command, the information-to-be-consolidated extracting unit 307 acquires expanded ordinary deposit data from the expanded ordinary deposit data storage unit 305 and extracts expanded records, which can be consolidated into groups, from the acquired expanded ordinary deposit data.

Consolidation is performed such that records having the same CF occurrence date and the same currency type are grouped together. In this specific example, the CF occurrence date and the currency type of the expanded records R601, R602, R603 are the same and thus these expanded records are grouped together. Similarly, the expanded records R604, R605, and R606, which are the same in terms of the CF occurrence date and the currency type, are grouped together. If the consolidated-content calculation unit 308 receives R601 to R603 grouped together, the consolidated-content calculation unit 308 calculates the sum of the values described in the deposited principal field 604 and the values described in the withdrawn principal field 605 of the three expanded records R601 to R603 thereby producing the data of the principal movement field 705 of a consolidated record. Similarly, the consolidated-content calculation unit 308 produces data of the interest movement field 706 by summing up the values in the paid interest field 606, and produces data of the outstanding balance field 707 by summing up the values in the outstanding balance field 607. Furthermore, the consolidated-content calculation unit 308 produces codes indicating the financial product and. the consolidation ID depending on the financial product and the currency type, by looking up a conversion table (not shown). Thus, a consolidated record R701 including the above data is obtained. Similarly, a consolidated record R702 is produced from a group of R604, R605, and R606.

The consolidated records R701 and R702 are stored in the consolidated ordinary deposit data storage unit 309 and supplied to the risk management system 3 as required.

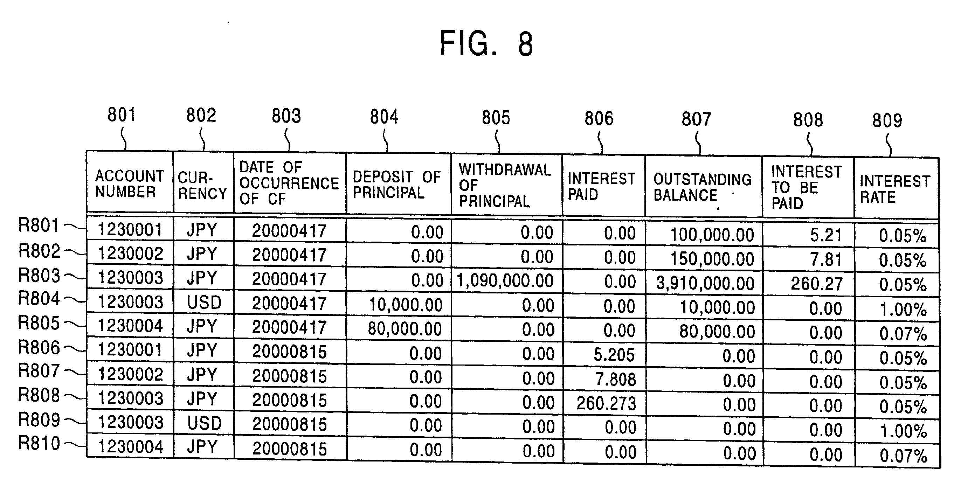

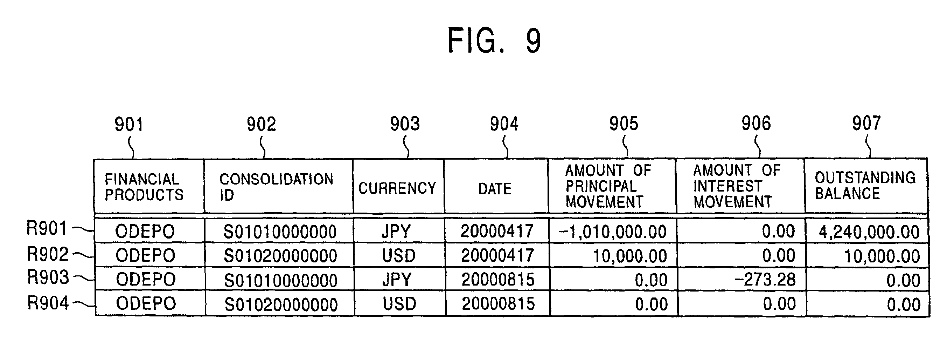

On April 17, an operation is performed as follows. Fig. 8 shows expanded ordinary deposit data as of the processing reference date of April 17. Fig. 9 shows consolidated ordinary deposit data as of the same day.

The transaction information expanding means 301 produces the expanded ordinary deposit data shown in Fig. 8 in a similar manner as described above with reference to Figs. 6 and 7.

The expanded ordinary deposit data includes an expanded record R801 of the account #1, an expanded record R802 of the account #2, expanded records R803 and R804 of the account #3, an expanded record R805 of the account #4, which are produced by the cash movement processing unit 304 so as to indicate a movement of a principal, a movement of interest, and an outstanding deposit balance of each respective account as of the processing reference date. In the CF occurrence date field 803 of each of those expanded records, "20000417" is described by the cash movement processing unit 304 to indicate that the processing reference date is April 17, 2000.

On April 17, a new account #4 is opened and 80,000 yen is deposited. On the same day, 10,000 U.S. dollars are purchased from the account #3 and deposited as a foreign-currency ordinary deposit. The ordinary deposit transaction information expanding means 301 produces expanded records as described below such that the transactions performed on April 17 correctly reflected in the expanded records. That is, in response to the opening of the new account #4, an expanded record R805 is produced, and an expanded record R810 is also produced to indicate the interest to be paid on the next interest payment date (August 15). In response to the purchasing of 10,000 U.S. dollars from the account #3, "1090000" is described in the withdrawn principal field of an expanded record R803. Furthermore, an expanded record R804 is produced to indicate that 10,000 U.S. dollars are deposited as a foreign-currency ordinary deposit. In the currency type field 802 of the record R804, a code "USD" is described to indicate that the currency type of U.S. dollar.

The interest cash flow processing unit 306 produces expanded records to indicate interests to be paid on the next interest payment date. More specifically, an expanded record R806 associated with the account #1, an expanded record R807 associated with the account #2, expanded records R808 and R809 associated with the account #3, and an expanded record R810 associated with the account #4 are produced. In the paid interest fields of the respective expanded records R806 to R810, the amounts of interests to be paid on the next interest payment date are described. The interest to be paid on the next interest payment date is defined as interest applied to a period from the previous interest payment date (account opening date in the case where the first interest payment date has not been arrived at) to the next interest payment date. To indicate the next interest payment date is August 15, 2000, the interest cash flow processing unit 306 stores data of "20000815" into the CF occurrence date field of the above-described records.

Thus, the movements of capitals and interests, the outstanding deposit balances, and the interests to be paid on the next interest payment date (August 15), as of the processing reference date (April 17), are described in expanded records for all accounts.

The transaction information consolidating means 302 performs consolidation such that expanded records which are the same in terms of the currency type and the CF occurrence date are grouped together and expanded records in each group are consolidated into one consolidated record. More specifically, expanded ordinary deposit data R801, R802, R803, and R805 whose currency type is yen (JPY) and cash flow occurrence date is April 17 are extracted by the information-to-be-consolidated extracting unit into a first group and consolidated by the consolidated-content calculation unit 308 into a consolidated record R901.

Expanded ordinary deposit data R804 representing the cash flow of "dollars" on April 17 is extracted as a second group by the information-to-be-consolidated extracting unit 307 and consolidated by the consolidated-content calculation unit 308 into a consolidated record R902.

Furthermore, expanded ordinary deposit data R806, R807, R808, and R810 representing the cash flow of "yen" on August 15 are extracted by the information-to-be-consolidated extracting unit 307 into a third group and consolidated by the consolidated-content calculation unit 308 into a consolidated record R903.

Expanded ordinary deposit data R809 representing the cash flow of "dollars" on August 15 is extracted by the information-to-be-consolidated extracting unit 307 and consolidated by the consolidated-content calculation unit 308 into a consolidated record R904.

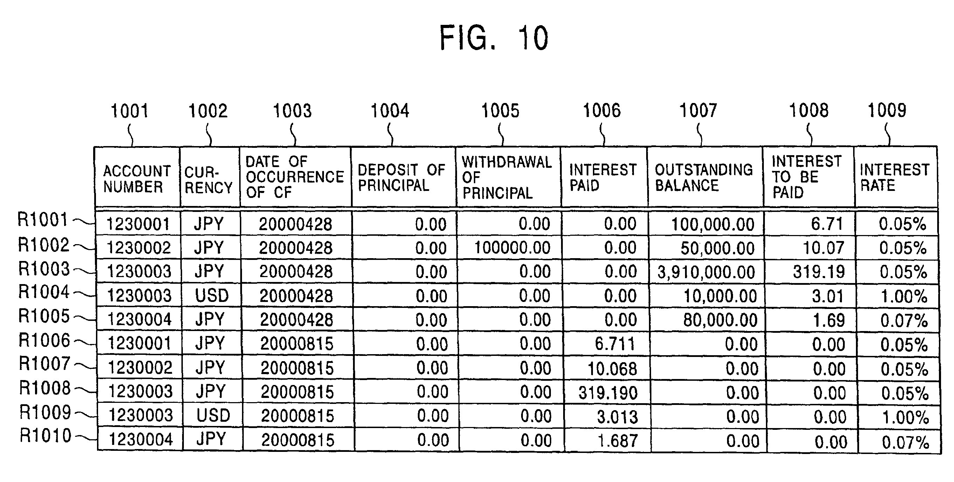

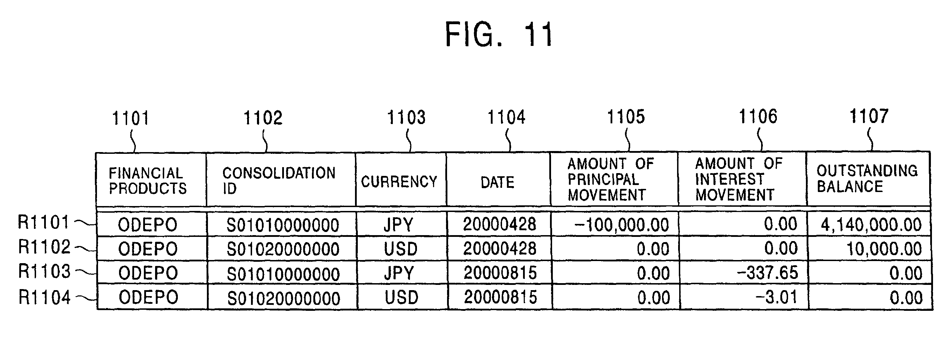

The operation is described below for the case where the processing reference date is April 28. Fig. 10 shows expanded ordinary deposit data produced by the ordinary deposit transaction information expanding means 301 in the case where the processing reference date is April 28, and Fig. 11 shows consolidated ordinary deposit data produced by the ordinary deposit transaction information consolidating means 302 from the expanded ordinary deposit data.

As shown in the scenario of Fig. 5, 100,000 yen is withdrawn from the account #2 on April 28. Thus, on the basis of data acquired by the ordinary deposit transaction information acquisition unit 303 from the ordinary deposit ledger file 21, the cash movement processing unit 304 detects that movement of a principal has occurred. In response to the detection, the cash movement processing unit 304 produces an expanded record R1002 and describes the amount of withdrawal in the withdrawn principal field of the expanded record R1002. As for the other accounts #1, #3, and #4, the cash movement processing unit 304 produces expanded records R1001, R1003, R1004, and R1005, in which the outstanding balances as of April 28 are described.

The interest cash flow processing unit 306 calculates the interests to be paid on the next interest payment date (August 15) for the respective accounts #1 to #4 and produces expanded records R1006 to R1010 in which the calculated interests are described.

The produced expanded records R1001 to R1010 are stored as expanded ordinary deposit data into the expanded ordinary deposit data storage unit 305.

The consolidated ordinary deposit data shown in Fig. 11 is produced in a similar manner as described above, via grouping performed by the information-to-be-consolidated extracting unit 307 on the expanded ordinary deposit data stored in the expanded ordinary deposit data storage unit 305 and via production of consolidated records performed by the consolidated-content calculation unit 308. In this example, the amount of principal movement is described in the principal movement field of a consolidated record R1101 such that the cash flow caused by the withdrawal of 100,000 yen from the account #2 is reflected.

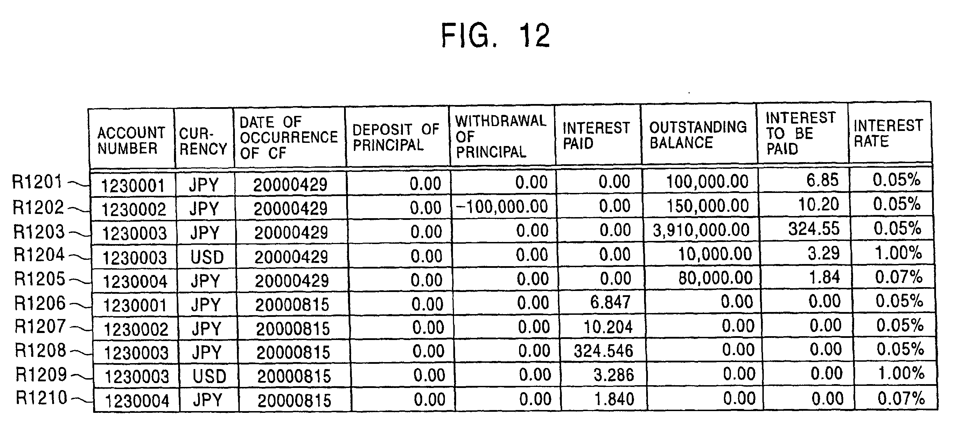

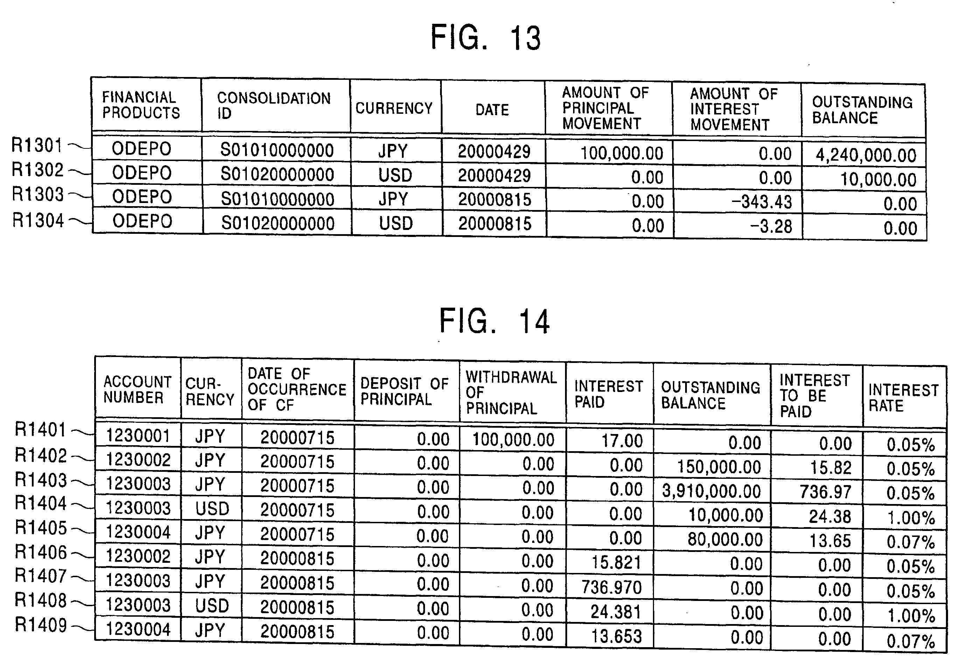

The operation performed on April 29 is described below. Fig. 12 shows expanded ordinary deposit data produced by the ordinary deposit transaction information expanding means 301 in the case where the processing reference date is April 29, and Fig. 13 shows consolidated ordinary deposit data produced by the ordinary deposit transaction information consolidating means 302 from the expanded ordinary deposit data.

In the scenario shown in Fig. 5, the withdrawal of 100,000 from the account #2 is cancelled on April 29 (because, for example, the withdrawal on April 28 was performed in response to a wrong information issued by a terminal of a branch of a bank). If the ordinary deposit transaction information acquisition unit 303 acquires from the ordinary deposit ledger file 21 data indicating the cancellation of the withdrawal, the cash movement processing unit 304 determines that principal movement has occurred and produces an expanded record R1202 in which the amount of principal movement is described in the withdrawn principal field. In this case, the sign becomes negative to reflect the cancellation of the withdrawal.

As for the other accounts #1, #3, and #4, the cash movement processing unit 304 produces expanded records R1201, R1203, R1204, and R1205, in which the outstanding balances as of April 28 are described.

The interest cash flow processing unit calculates the interests to be paid on the next interest payment date (August 15) for the respective accounts #1 to #4 and produces expanded records R1206 to R1210 in which the calculated interests are described.

The consolidated ordinary deposit data shown in Fig. 13 is produced in a similar manner as described above, via grouping performed by the information-to-be-consolidated extracting unit 307 on the expanded ordinary deposit data stored in the expanded ordinary deposit data storage unit 305 and via production of consolidated records performed by the consolidated-content calculation unit 308, thereby producing consolidated records R1301 to R1304. In this example, the amount of principal movement is described in the principal movement field of a consolidated record R1301 so as to reflect the cash flow caused by the cancellation of the withdrawal of 100,000 yen from the account #2.

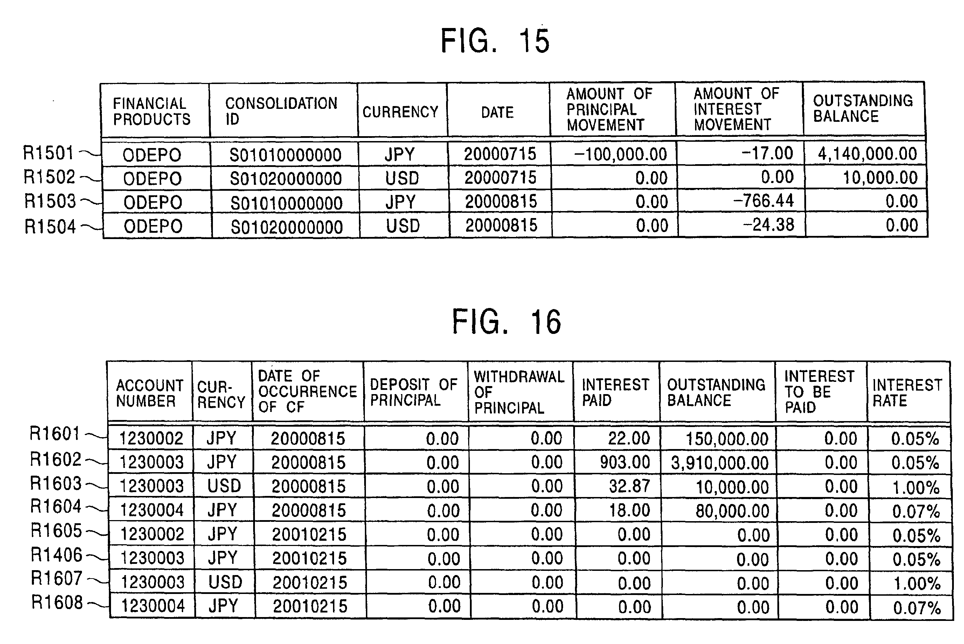

The operation performed on the calculation date base of July 15 is described below. Fig. 14 shows expanded ordinary deposit data produced in the case where the processing reference date is July 15, and Fig. 15 shows consolidated ordinary deposit data produced by the ordinary deposit transaction information consolidating means 302 from the expanded ordinary deposit data.

In the scenario shown in Fig. 5, the account #1 is cancelled on July 15. If the cash movement processing unit 304 detects, on the basis of data acquired by the ordinary deposit transaction information acquisition unit 303 from the ordinary deposit ledger file 21, movements of the principal and the interest and a change in the balance into 0 yen caused by the payment of the balance of 100,000 in the account #1 and the interest as of the cancellation date, the cash movement processing unit 304 produces an expanded record R1401 in which resultant values are described in the withdrawn principal field, the paid interest field, and the outstanding balance field, respectively.

As for the other accounts #2, #3, and #4, the cash movement processing unit 304 produces expanded records R1402, R1403, R1404, and R1405, in which the outstanding balances as of July 28 are described.

The interest cash flow processing unit 306 calculates the interests to be paid on the next interest payment date (August 15) for the respective accounts #2 to #4 other than the cancelled account #1 and produces expanded records R1406 to R1409 in which the calculated interests are described in the paid interest field. As for the account #1, the interest cash flow processing unit 306 no longer needs to produce expanded ordinary deposit data to indicate the cash flow (interest payment) because the account #1 has been cancelled.

The resultant expanded records R1401 to R1409 are stored as expanded ordinary deposit data into the expanded ordinary deposit data storage unit 305.

The consolidated ordinary deposit data shown in Fig. 15 is produced in a similar manner as described above, via grouping performed by the information-to-be-consolidated extracting unit 307 on the expanded ordinary deposit data stored in the expanded ordinary deposit data storage unit 305 and via production of consolidated records performed by the consolidated-content calculation unit 308. In this example, the amount of principal movement is described in the principal movement field of a consolidated record R1501 so as to reflect the cash flows caused by the principal payment of 1000,000 yen from the account #1 and the interest payment.

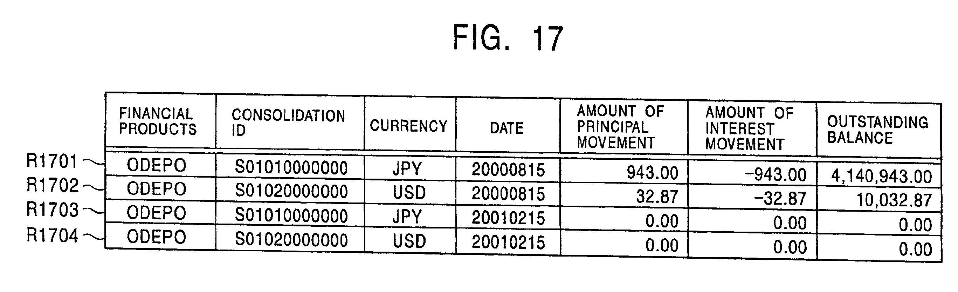

The operation performed on August 15 is described below. Fig. 16 shows expanded ordinary deposit data produced by the ordinary deposit transaction information expanding means 301 in the case where the processing reference date is August 15, and Fig. 17 shows consolidated ordinary deposit data produced by the ordinary deposit transaction information consolidating means 302 from the expanded ordinary deposit data.

In the scenario shown in Fig. 5, August 15 is set to be an interest payment date on which interests are paid for all ordinary deposit accounts. On the basis of data acquired by the ordinary deposit transaction information acquisition unit 303 from the ordinary deposit ledger file 21, the cash movement processing unit 304 detects the occurrence of the cash flow (interest payment) and produces expanded records R1601, R1602, R1603, and R1604, in which amounts of interests paid are described in the paid interest field.

The interest cash flow processing unit 306 produces expanded records R1605, R1606, R1607, and R1608 associated with the accounts #2 to #4 and describes the interest to be paid on the next interest payment date. February 15, 2001, in the paid.interest fields of the respective expanded records.

The consolidated ordinary deposit data shown in Fig. 17 is produced in a similar manner as described above, via grouping performed by the information-to-be-consolidated extracting unit 307 on the expanded ordinary deposit data stored in the expanded ordinary deposit data storage unit 305 and via production of consolidated records performed by the consolidated-content calculation unit 308. Herein, the consolidated records are produced by the consolidated-content calculation unit 308 such that the interest associated with the corresponding record is added to the balance and the resultant sum is described in the outstanding balance field. The produced expanded records R1701 to R1704 are stored as consolidated ordinary deposit data into the consolidated ordinary deposit data storage unit 309.

Thus, the resultant consolidated ordinary deposit data precisely indicates the cash flows that occur on the processing reference date or that will occur in the future. The number of records of the consolidated ordinary deposit data and the data size thereof are much smaller than those of the original transaction information. By using the consolidated ordinary deposit data, it becomes possible for the risk management system to manage a very large number of cash flows including those associated with retail transactions.

### (2. Time deposit transaction information consolidating unit)

### (2.1 Example of construction)

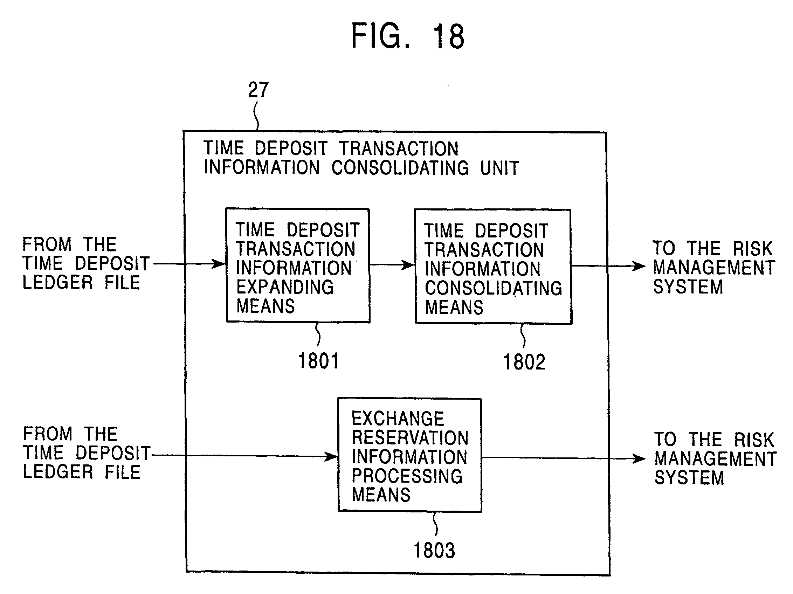

Referring to Fig. 18, an example of the construction of the time deposit transaction information consolidating unit 27 for consolidating transaction information stored in the time deposit ledger file 22 is described below.

As shown in Fig. 18, the time deposit transaction information consolidating unit 27 includes time deposit transaction information expanding means (hereinafter, referred to as a TDTI expanding means) 1801, time deposit transaction information consolidating means (hereinafter, referred to as a TDTI consolidating means) 1802, and foreign currency time deposit exchange reservation information processing means (hereinafter, referred to as a reservation processing means) 1803.

The TDTI expanding means 1801 receives time deposit transaction data from the time deposit ledger file 22, produces expanded time deposit data on the basis of the transaction data, and outputs the resultant expanded time deposit data. The TDTI consolidating means 1802 receives expanded time deposit data from the TDTI expanding means 1801, produces consolidated time deposit data on the basis of the received expanded time deposit data, and outputs the resultant consolidated time deposit data to the risk management system 3. The reservation processing means 1803 receives exchange reservation data associated with cancellation of foreign currency deposit from the time deposit ledger file 22, produces consolidated exchange reservation information on the basis of the received exchange reservation data, and outputs the resultant consolidated exchange reservation information to the risk management system 3.

Herein, the term "exchange reservation" refers to a reservation, made before the expiration date of a foreign deposit, for exchange of a specified amount of foreign currency into Japanese yen on the expiration date at an exchange rate of a specified day. In the case where the ledger file does not include a foreign currency deposit, the reservation processing means is not necessary.

### (2.2 Examples of constructions of TDTI expanding means and TDTI consolidating means)

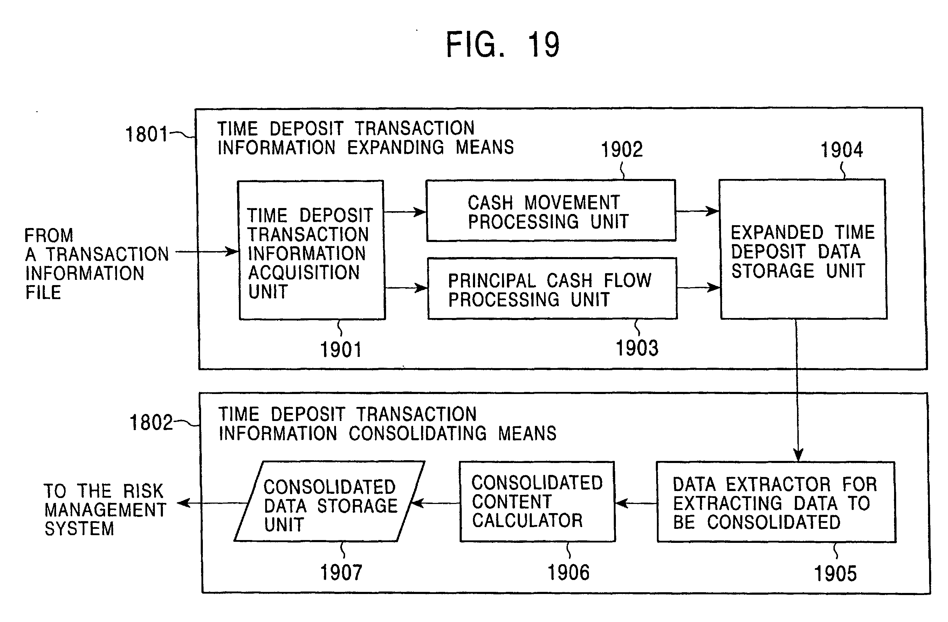

Fig. 19 is a block diagram showing examples of constructions of the TDTI expanding means 1801 and the TDTI consolidating means 1802). The TDTI expanding means 1801 includes a time deposit transaction information acquisition unit 1901 connected to the time deposit ledger file 22, a cash movement processing unit 1902 connected to the transaction information acquisition unit 1901, a principal cash flow processing unit 1903 also connected to the transaction information acquisition unit 1901, and an expanded data storage unit 1904 connected to the cash movement processing unit 1902 and the principal cash flow processing unit 1903.

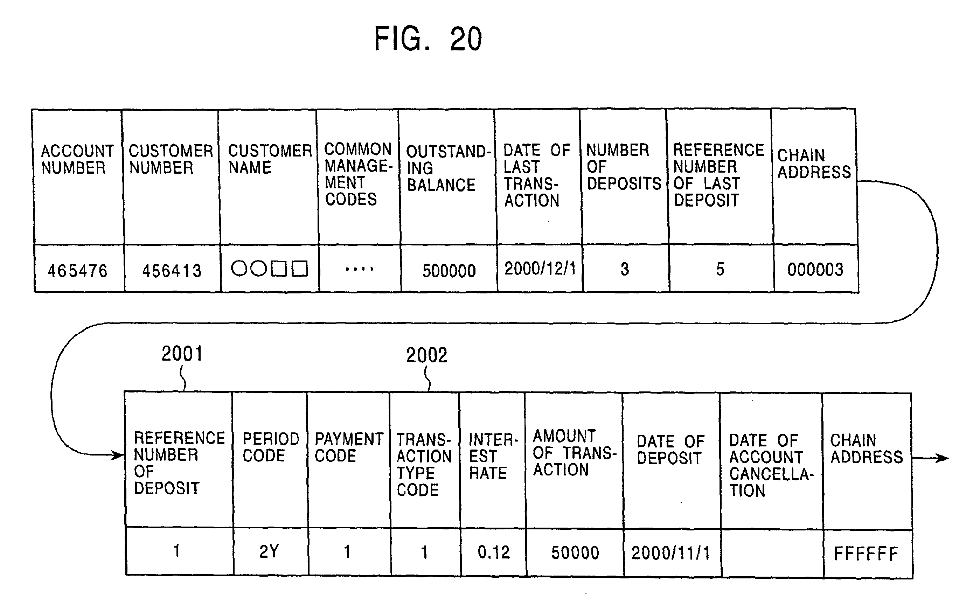

The transaction information acquisition unit 1901 acquires data needed for calculation of monetary movement from the time deposit ledger file 22 on a record-by-record basis. Fig. 20 is a diagram showing an example of a format of a record of the time deposit ledger file 22. In addition to fields similar to those of a record of the ordinary deposit transaction ledger file 21 shown in Fig. 4, each record of the time deposit ledger file 22 includes a period code filed 2001 for indicating a time deposit period and a type code field 2002 for indicating the deposit type such as an automatic cancellation type or an automatic cancellation type. By referring to these fields, the reception/payment processing unit 32 can perform processing relating to time deposit, such as processing performed at the expiration of the deposit period, automatic redepositing, or automatic cancellation. The transaction information acquisition unit 1901 reads necessary data record by record and supplies the data to the principal cash flow processing unit 1902 and the cash movement processing unit 1903.

On the basis of the data acquired by the transaction information acquisition unit 1901, the cash movement processing unit 1902 produces an expanded time deposit record corresponding to each record of the time deposit ledger file 22 and describes movements of a principal and interest which have occurred on the processing reference date in each expanded time deposit record.

On the basis of the data acquired by the transaction information acquisition unit 1901, the principal cash flow processing unit 1903 calculates the amounts of the principal, the interest, and the outstanding balance as of a principal/interest movement date (such as a maturity date or interest payment date) for each record of the time deposit ledger file 22, describes the calculated amounts in an expanded record, and supplies the expanded record to the expanded time deposit data storage unit 1904.

The expanded time deposit data storage unit 1904 stores, as expanded time deposit data, the records supplied from the cash movement processing unit 1902 and the principal cash flow processing unit 1903. When the time deposit transaction information expanding means 1801 has finished the processing for all records of the time deposit ledger file 22, the expanded time deposit data is completed.

The time deposit transaction information consolidating means 1802 includes an information-to-be-consolidated extracting unit 1905 connected to the expanded time deposit data storage unit 1904, a consolidated-content calculation unit 1906 connected to the information-to-be-consolidated extracting unit 1905, and a consolidated time deposit data storage unit 1907 connected to the consolidated-content calculation unit 1906.

If the information-to-be-consolidated extracting unit 1905 extracts expanded time deposit data, which can be consolidated into groups, from the data stored in the expanded time deposit data storage unit 1904. The consolidation is performed such that records having the same date of occurrence of cash flow (such as a date of movement of a principal or interest, an account opening date, a maturity date, or an interest payment date) and the same currency type (yen, U.S. dollar, or euro) are grouped together and stored into one record. The consolidation can be performed, for example, by sorting the expanded records using the date of occurrence of cash flow and the currency type as keys and grouping the sorted records such that records which are different in the date of occurrence of cash flow or the currency type fall into different groups.

If the consolidated-content calculation unit 1906 receives the grouped records from the information-to-be-consolidated extracting unit 1905, the consolidated-content calculation unit 1906 calculates the sum of principals, the sum of interest, and the sum of deposit balances of all records in each group, and stores the calculated sums for each group into one consolidated record. The resultant consolidated records are supplied to the consolidated ordinary deposit data storage unit 1907. As for records that cannot be grouped, one consolidated record is produced for each such expanded record without calculating the sums, and the resultant consolidated records are supplied to the consolidated ordinary deposit data storage unit 1907.

When all groups have been processed, consolidated time deposit data including a complete set of consolidated records is obtained. The consolidated time deposit data storage unit 1907 stores the obtained consolidated time deposit data and supplies the stored consolidated time deposit data to the risk management system 3.

Preferably, the consolidated records are produced in a format that satisfies the specifications of the risk management system 3. In the case where the format of the consolidated time deposit data does not satisfy the specifications, the consolidated time deposit data is supplied to the risk management system 3 after converting the format via interface means (not shown) into a format that satisfies the specifications of the risk management system 3.

### (2.3 Examples of operations of the time deposit transaction information expanding means and the time deposit transaction information consolidating means)

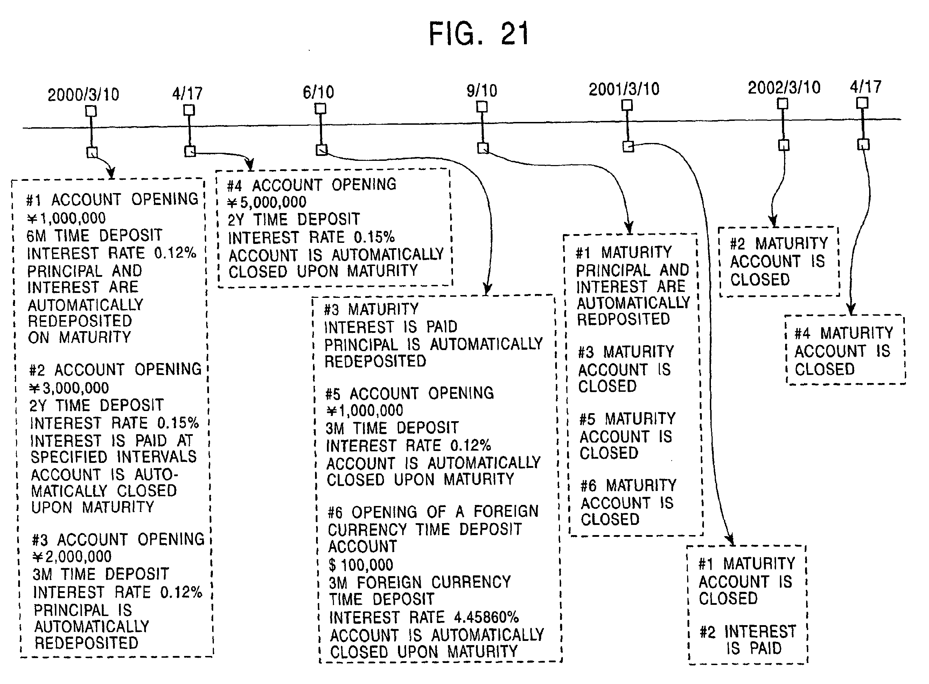

Referring to Fig. 21 showing an example of time deposit transaction, an example of the operation of the time deposit transaction information expanding means 1801 and the time deposit transaction information consolidating means 1802 is described below. Fig. 21 a diagram showing an example of a scenario of time deposit transactions.

In this scenario, three new time deposit accounts #1, #2, and #3 are opened on March 10, 2000. The contract conditions in terms of the amount of deposit, the length of the deposit period, the interest rate, and the treatment at the expiration of the period are 1,000,000 yen, 6 months, 0.12%, and automatic redeposit for both principal and interest for the account #1, 3,000,000 yen, 2 years, 0.15%, and automatic cancellation for the account #2, 2,000,000 yen, 3 months, 0.12%, and automatic redeposition for the principal for the account #3, wherein interest for the account #2 is paid at contracted intervals. On April 17, a new time deposit account #4 is opened under the contract conditions of 5,000,000 yen, 2 years, 0.15%, and automatic cancellation, in terms of the amount of deposit, the length of the deposit period, the interest rate, and the treatment at the expiration of the period.

On June 10, the deposit period of the account #3 expires, and the principal and the interest are automatically redeposited. On the same day, two new accounts #5 and #6 are opened. The contract conditions applied to the account #5 in terms of the amount of deposit, the length of the deposit period, the interest rate, and the treatment at the expiration of the period are 1,000,000 yen, 3 months, 0.12%, and automatic cancellation, respectively, and the contract conditions applied to the account #6 are 100,000 U.S. dollars, 3 months, 4.45860%, and automatic cancellation, respectively.

On September 10, the deposit period of the account #1 expires, and the principal and the interest are automatically redeposited. On the same day, the accounts #3, #5, and #6 also expire and these accounts are cancelled.

On March 10, 2001, the deposit period of the account #1 expires and the account #1 is cancelled. On the same day, interest payment for the account #2 is performed.

On March 10, 2002, the deposit period of the account #2 expires and the account #2 is cancelled. On April 17, 2002, the deposit period of the account #4 expires and the account #4 is cancelled.

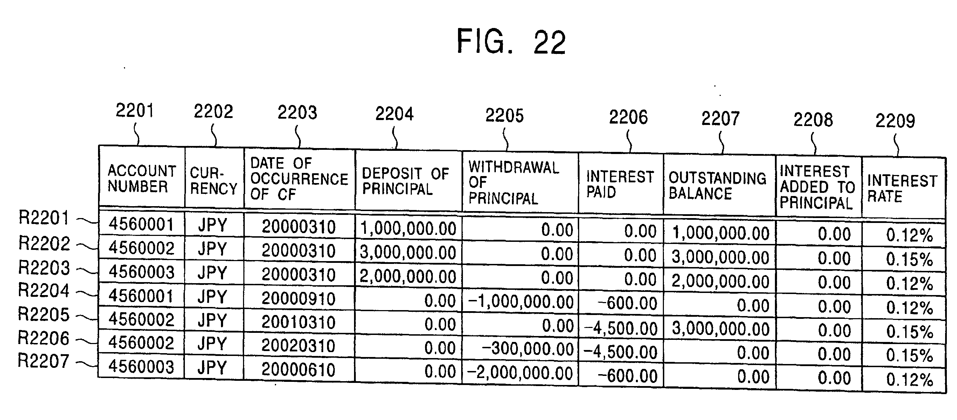

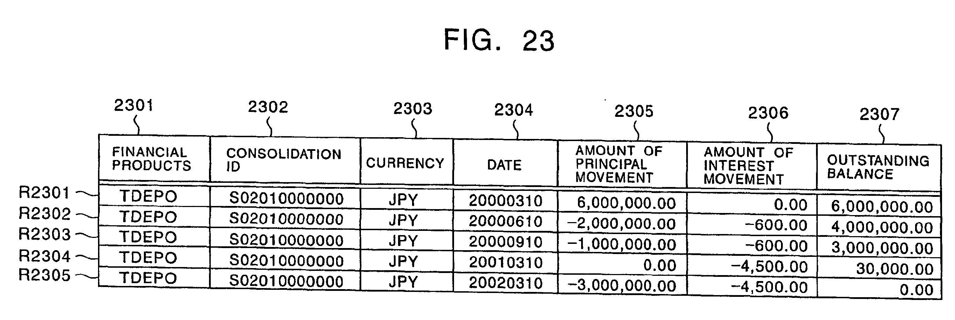

Fig. 22 shown expanded time deposit record produced by the time deposit transaction information expanding means 1801 on March 10, 2000. Fig. 23 shows consolidated time deposit data produced by the time deposit transaction information consolidating means 1802 on the same day.

As shown in Fig. 22, the expanded time deposit data includes a plurality of expanded records R2201 to R2207, wherein each record includes an account number field 2201, a currency type field 2202, a CF occurrence date field 2203, a deposited principal field 2204, a withdrawn principal field 2205, a paid interest field 2206, an outstanding balance field 2207, an interest-added-to-principal field 2208, and an interest rate field 2209.

The consolidated time deposit data shown in Fig. 23 includes a plurality of consolidated records R2301 to 2305, wherein each consolidated record includes a financial product field 2301, a consolidation ID field 2302, a currency type field 2303, a date field 2304, a principal movement field 2305, an interest movement field 2306, and an outstanding balance field 2307. In the financial product field, there is described a code identifying a corresponding financial product. The consolidation ID is an identifier identifying the consolidated data.

The expanded data shown in Fig. 22 is produced as follows. On the basis of data acquired by the time deposit transaction information acquisition unit 1901 from the ledger file 22, the cash movement processing unit 304 detects, from records corresponding to respective accounts of the ledger file 22, that accounts #1 to #3 were opened and money was deposited thereinto on March 10, and thus the cash movement processing unit 304 produces expanded records R2201, R2202, and R2203. In the account number field 2201, the currency type field 2202, the CF occurrence date field 2203, and the interest rate field 2209, corresponding data acquired from the ledger file are copied. The amount of deposit of each account is stored in the deposited principal field 2204 and the outstanding balance field 2207 of the corresponding record.

The principal cash flow processing unit 1903 produces expanded records R2204 to R2207 for describing the principals and interest of the accounts #1 to #3 to be paid on the expiration dates. The principal cash flow processing unit 1903 calculates the principals and interest to be paid on the expiration dates and the interest to be paid on the interest payment dates for the respective expanded records, and stores the calculated values into the withdrawn principal field 2205, the paid interest field 2206, and the outstanding balance field 2207.

The produced expanded records are supplied to the expanded data storage unit 1904. Thus, the expanded data such as that shown in Fig. 22 is stored in the expanded data storage unit 1904.

Thereafter, the TDTI expanding means 1801 issues a command to the TDTI consolidating means 1802 to start processing. If the TDTI consolidating means 1802 receives the command, the information-to-be-consolidated extracting unit 1905 acquires expanded data from the expanded data storage unit 1904 and extracts expanded records, which can be consolidated into groups, from the acquired expanded data. In this case, expanded records having the same currency type and the same CF occurrence date are grouped together. In this specific example, the expanded records R2201, R2202, and R2203 have the same currency type and the same CF occurrence date, and thus these three records are consolidated into one consolidated record.

If the consolidated-content calculation unit 1906 receives these three records grouped together, the consolidated-content calculation unit 1906 calculates the sum of the values described in the deposited principal field 2204 and the values described in the withdrawn principal field 2205 of these three records, thereby producing the data of the principal movement field 2305. Similarly, the consolidated-content calculation unit 1906 produces data of the interest movement field 2306 by summing up the values in the paid interest field 2206, and produces data of the outstanding balance field 2307 by summing up the values in the outstanding balance field 2207. Furthermore, the consolidated-content calculation unit 308 produces codes indicating the financial product and the consolidation ID depending on the financial product and the currency type, by looking up a conversion table (not shown). Thus, a consolidated record R2301 including the above data is obtained.

As for the other expanded records R2204, R2205, R2206, and R2207, there is no expanded records having the same currency type and the same CF occurrence date, and thus the information-to-be-consolidated extracting unit 1905 assigns one group to each of these expanded records and supplies the expanded records to the consolidated-content calculation unit 1906. On the basis of the received data, the consolidated-content calculation unit 1906 produces consolidated records R2302, R2303, R2304, and R2305.

The produced consolidated records R2301 to R2305 are supplied to the consolidated data storage unit 1907 and stored therein as consolidated data. The consolidated data is supplied to the risk management system 3 as required. Preferably, the consolidated records are produced in a format that satisfies the specifications of the risk management system 3. In the case where the format of the consolidated data does not satisfy the specifications, the consolidated data is supplied to the risk management system 3 after converting the format via interface means (not shown) into a format that satisfies the specifications of the risk management system 3.

In response to events, such as new account opening, interest payment, cancellation, and expiration of periods, in the period from April 17, 2000 to April 17, 2002 shown in Fig. 21, the time deposit transaction information expanding means 1801 also produces expanded time deposit data depending on the events, and the time deposit transaction information consolidating means 1802 produces consolidated time deposit data on the basis of the expanded time deposit data.

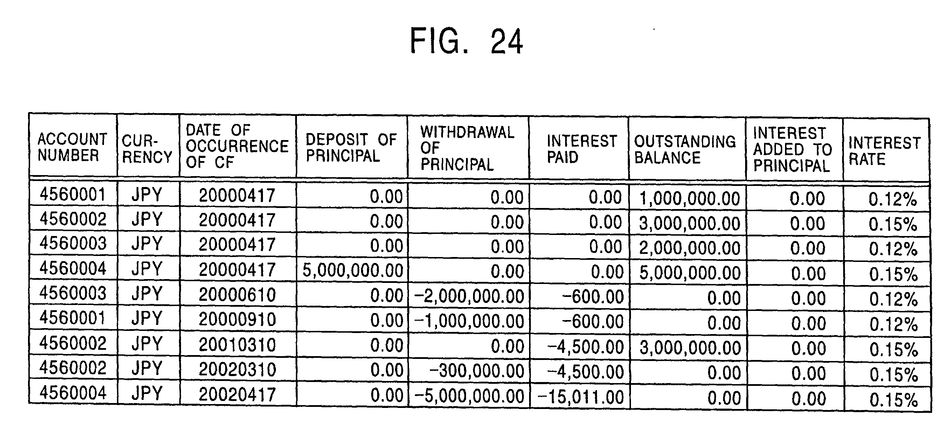

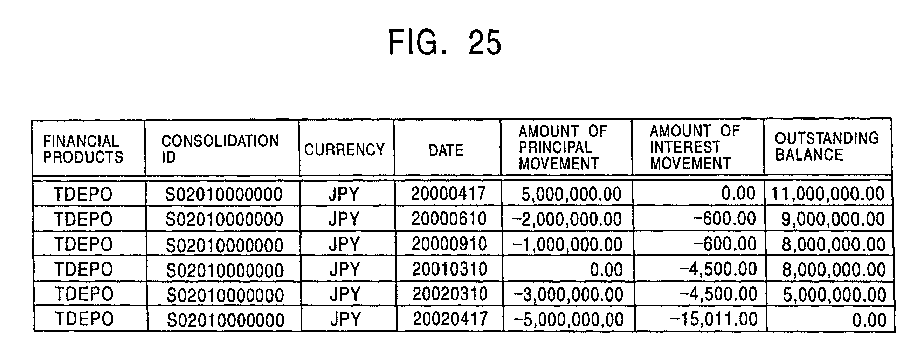

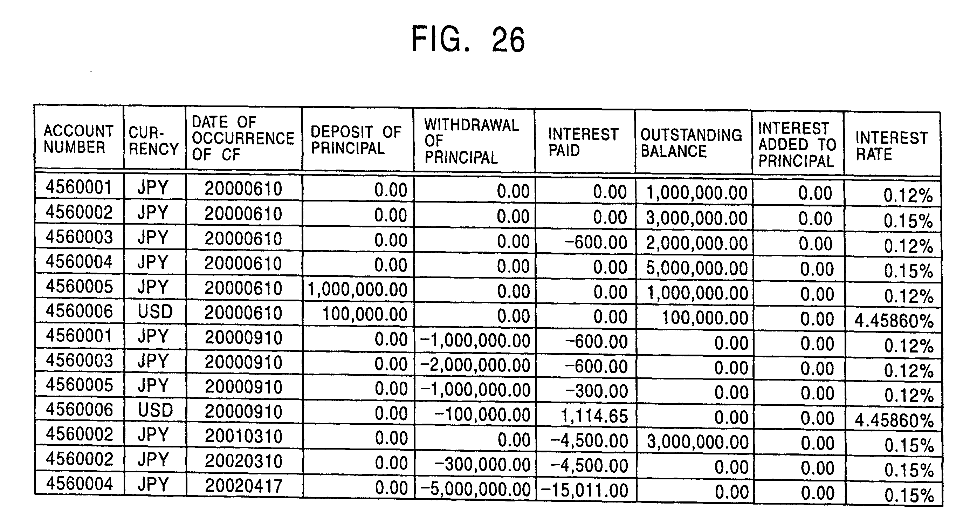

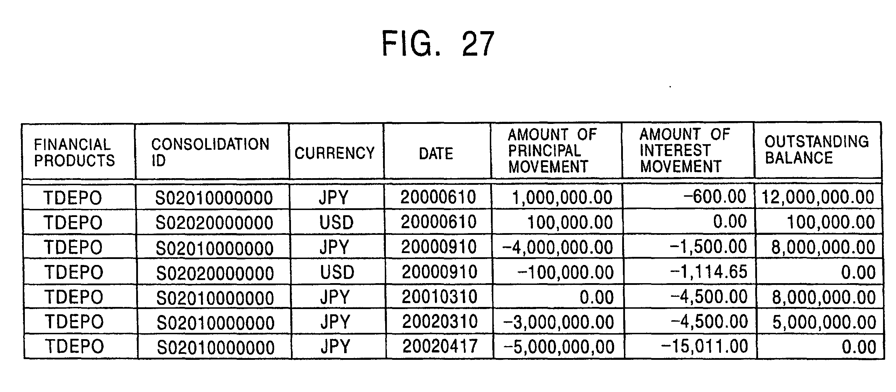

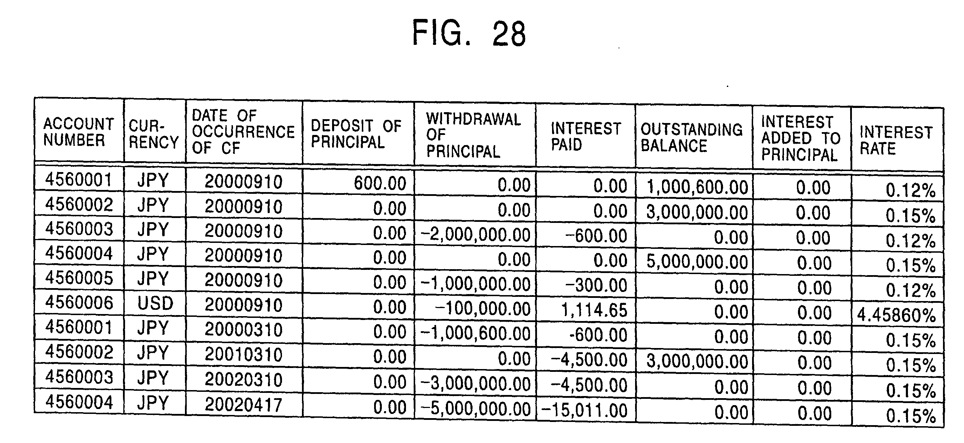

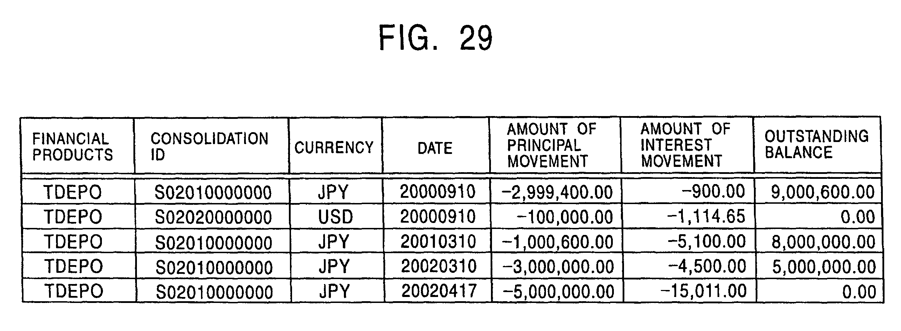

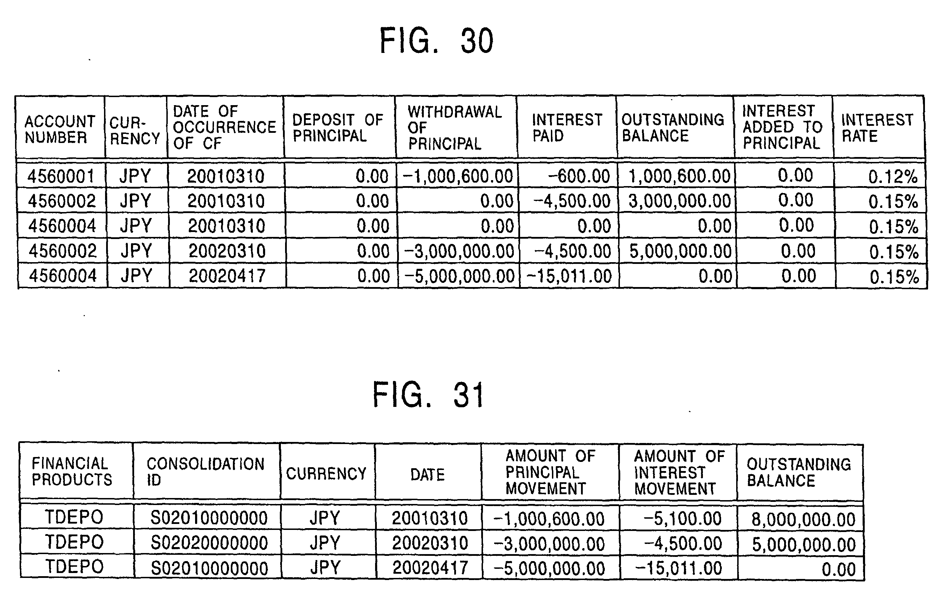

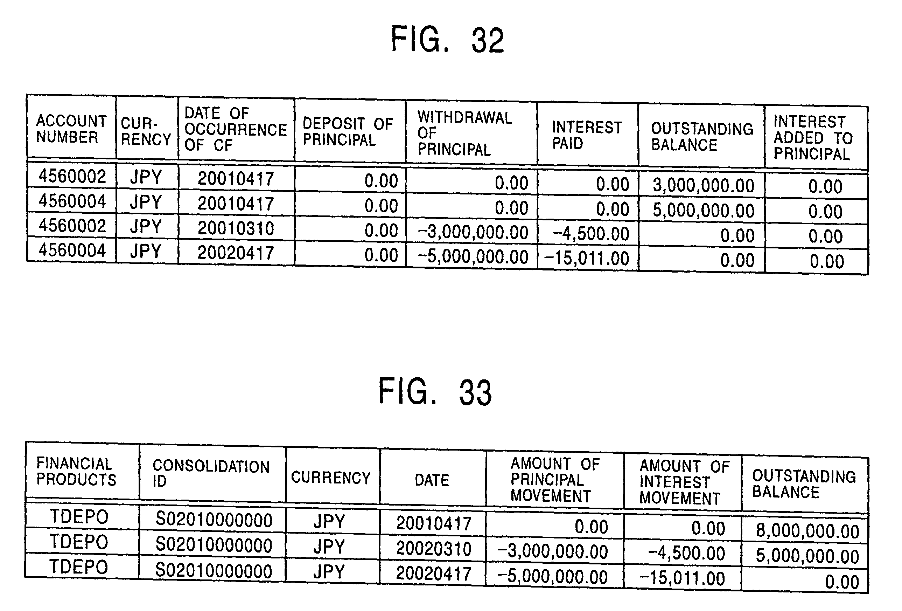

Expanded time deposit data and consolidated time deposit data produced on respective processing reference dates are shown in some figures. That is, Fig. 24 shows expanded time deposit data produced in the case where the processing reference date is April 17, 2000, and Fig. 25 shows consolidated time deposit data produced on the same day. Fig. 26 shows expanded time deposit data produced on June 10, 2000, and Fig. 27 shows consolidated time deposit data produced on the same day. Fig. 28 shows expanded time deposit data produced on September 10, 2000, and Fig. 29 shows consolidated time deposit data produced on the same day. Fig. 30 shows expanded time deposit data produced on March 10, 2001, and Fig. 31 shows consolidated time deposit data produced on the same day. Fig. 32 shows expanded time deposit data produced on April 17, 2001, and Fig. 33 shows consolidated time deposit data produced on the same day.

Thus, consolidated time deposit data is produced so as to indicate cash flows which occur on the processing reference dates or which will occur in the future. The number of records of the consolidated time deposit data and the data size thereof are much smaller than those of the original transaction information. By using the consolidated time deposit data, it becomes possible for the risk management system to manage a very large number of cash flows including those associated with retail transactions.

### (2.4 Example of the construction of the reservation processing means)

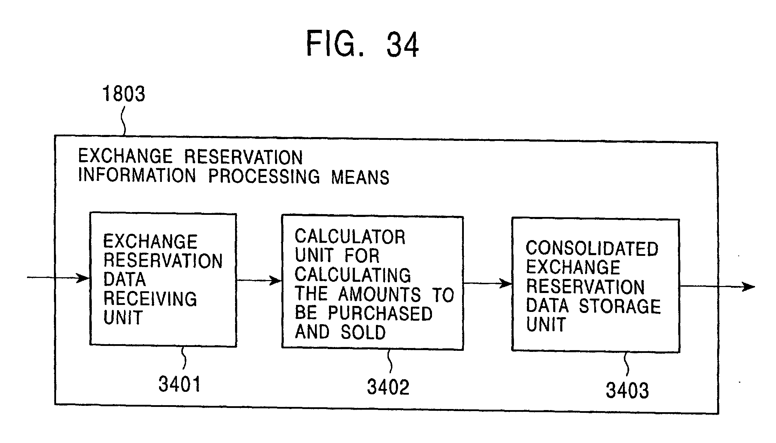

The construction of the reservation processing means 1803 is described below. Fig. 34 is a block diagram showing an example of the construction of the reservation processing means 1803. As shown in Fig. 34, the reservation processing means 1803 includes an exchange reservation data receiving unit 3401 for receiving exchange reservation data from the time deposit ledger file 22, a purchase/selling amount calculation unit 3402 for receiving data output from the exchange reservation data receiving unit 3401, and a consolidated exchange reservation data storage unit 3403 which receives data output from the purchase/selling amount calculation unit 3402 and supplies consolidated exchange reservation data to the risk management system 3.

The exchange reservation data receiving unit 3401 reads data stored in the time deposit ledger file, extracts and outputs data associated with exchange reservations, such as expiration dates, reserved exchange dates, reserved amounts (in foreign currencies), and contracted exchange rates. The purchase/selling amount calculation unit 3402 calculates the purchase amounts (reserved transaction amounts and associated interest) and the selling amounts (the amounts obtained by exchanging the purchased amounts into Japanese yen at the contracted exchange rates) on the basis of the exchange reservation data, and produces a consolidated exchange reservation information record in which the calculated values are stored for each exchange reservation. The consolidated exchange reservation information storage unit stores consolidated exchange reservation information including a set of consolidated exchange reservation information records.

### (2.5 Example of operation of the reservation processing means)

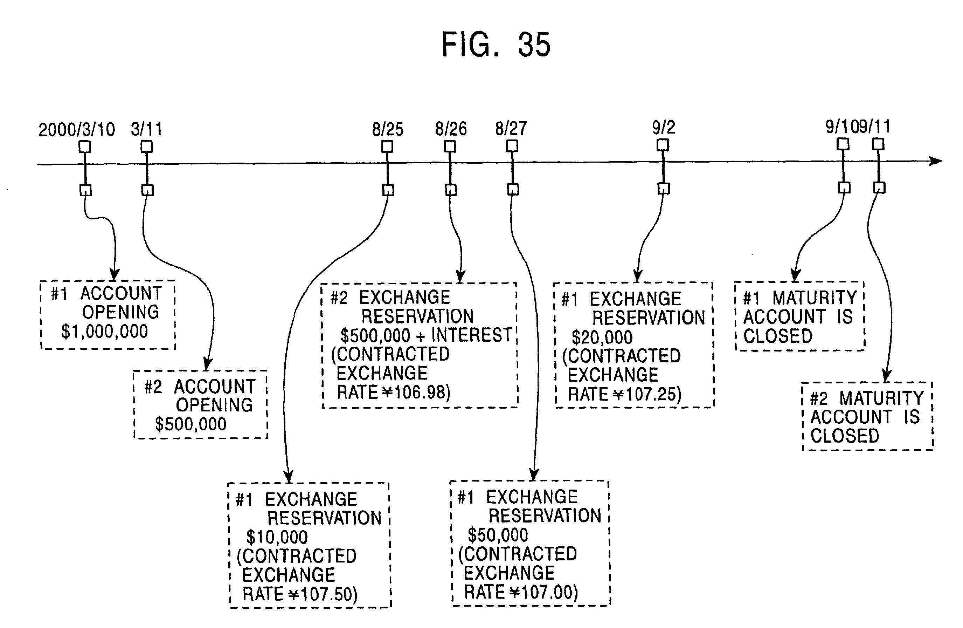

Referring to Fig. 35 showing an example of time deposit transaction, an example of the operation of the time deposit transaction information expanding means and the time deposit transaction information consolidating means is described below. Fig. 35 is a diagram showing an example of a scenario of time deposit transactions.

In this scenario, an account #1 is opened and 1,000,000 U.S. dollars are deposited on March 10, 2000. An account #2 is opened and 500,000 U.S. dollars are deposited on March 11, 2000. On August 25, 2000, a reservation of exchange of 10,000 U.S. dollars at a rate of 107.50 yen is made for the account #1. On the next day, August 26, 2000, a reservation of exchange of 500,000 U.S. dollars at a rate of 106.98 yen is made for the account #2. Furthermore, on August 27, 2000, a reservation of exchange of 50,000 U.S. dollars at a rate of 107.00 yen is made for the account #1. On September 2, 2000, a reservation of exchange of 20,000 U.S. dollars at a rate of 107.25 yen is made for the account #1. On September 11, 2000, the period of the account #1 expires and the account #1 is cancelled. On September 10, 2000, the period of the account #2 expires and the account #2 is cancelled.

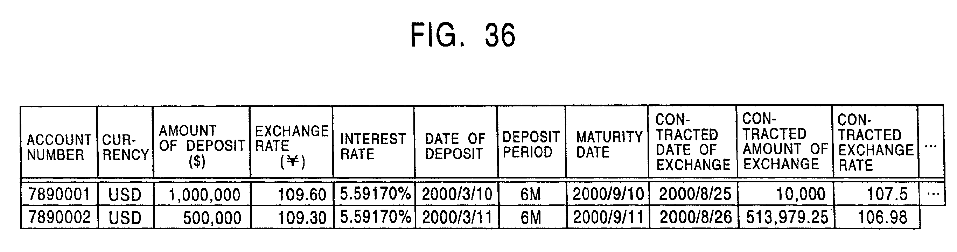

First, the exchange reservation data receiving unit 3401 acquires data associated with exchange reservations by extracting them from the time deposit ledger file 22. Fig. 36 shows an example of contents of data acquired by the exchange reservation data receiving unit 3401 from the time deposit ledger file 22. In this example, the exchange reservation data receiving unit 3401 extracts data indicating the currency type, the deposited amount (in foreign currency), the exchange rate, the interest rate, the deposit date, the deposit period, the maturity date, the reserved exchange date, the reserved exchange amount, and the contracted exchange rate, for each account having an exchange reservation. In Fig. 36, only data associated with the account #1 in terms of reservations of exchange to be practiced on August 25 and August 26, 2000 are shown, but data of reservations of exchange to be practiced on August 27, 2000 and September 2, 2000 are not shown. However, in practice, the exchange reservation data receiving unit 3401 also acquires the latter data which are not shown in Fig. 36.

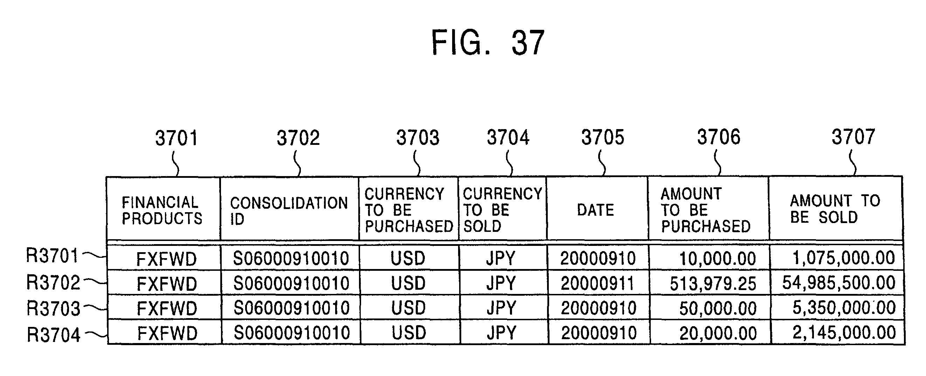

The purchase/selling amount calculation unit 3402 receives exchange reservation data such as that shown in Fig. 36 from the exchange reservation data receiving unit 3401 and performs necessary calculations on the basis of the received data. Fig. 37 is a diagram showing the calculations performed by the purchase/selling amount calculation unit 3402. The purchase/selling amount calculation unit 3402 produces one record for each exchange reservation. Each record includes a financial product field 3701, a consolidation ID field 3702, a purchase currency field 3703, a selling currency field 3704, a date field 3705, a purchase amount field 3706, and a selling amount field 3707. The purchase/selling amount calculation unit 3402 describes a code identifying a financial product in the financial product field, an identifier identifying consolidated exchange reservation information in the consolidation ID field, a code indicating the foreign currency type in the purchase currency field, a code indicating the Japanese currency in the selling currency field, and a reserved amount of exchange in the purchase amount field. Furthermore, the amount obtained by exchanging the amount described in the purchase amount field into the selling currency is calculated and the result is described in the selling amount field.

The purchase/selling amount calculation unit 3402 then produces consolidated exchange reservation information by consolidating the above-described records.

The consolidation is performed by the purchase/selling amount calculation unit 3402 such that records that can be consolidated into groups are extracted from the above-described records, and then sums of the purchase amounts and selling amounts described in records of the same group are calculated and the calculated sums are described in a consolidated record. In this specific example, the consolidation is performed such that records having the same CF occurrence date, the same purchase currency, and the same selling currency are grouped together. In the present example, the expanded records R3701, R3703, and R3704 have the same currencies and the same CF occurrence date, and thus these three records are grouped together.

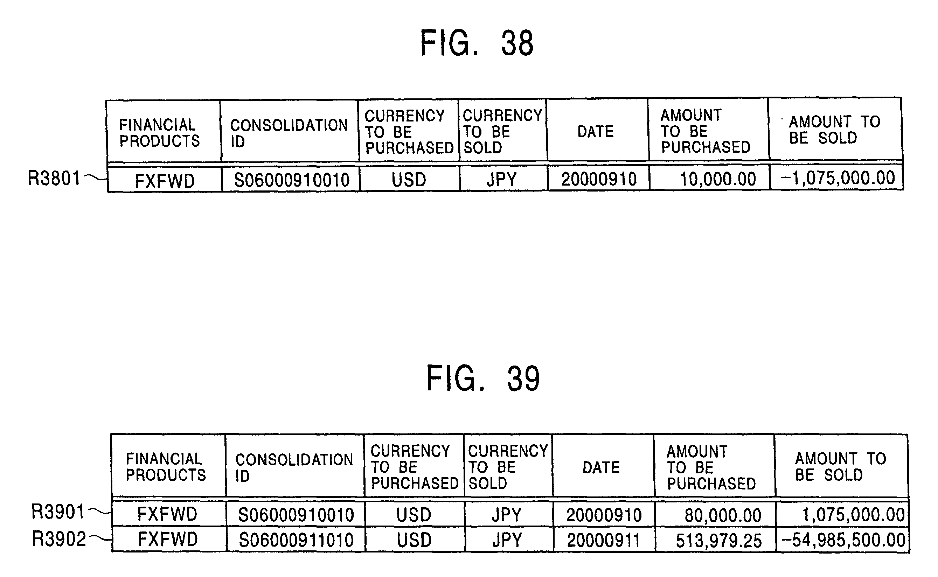

Figs. 38 to 41 show examples of consolidated exchange reservation information produced by the purchase/selling amount calculation unit 3402.

Fig. 38 shows consolidated exchange reservation information produced in the case where the processing reference date is August 25, 2000. In this case, only one record R3701 is produced by the purchase/selling amount calculation unit 3402, and there is no other data to be grouped with this record R3701. Thus, the resultant consolidated exchange reservation information includes only this record R3801.

Fig. 39 shows consolidated exchange reservation information produced in the case where the processing reference date is August 26, 2000. In this case, two records R3701 and R3702 are produced by the purchase/selling amount calculation unit 3402, and these two records are subjected to the consolidation process. Thus, the resultant consolidated exchange reservation information includes the records R3901 and R3902.

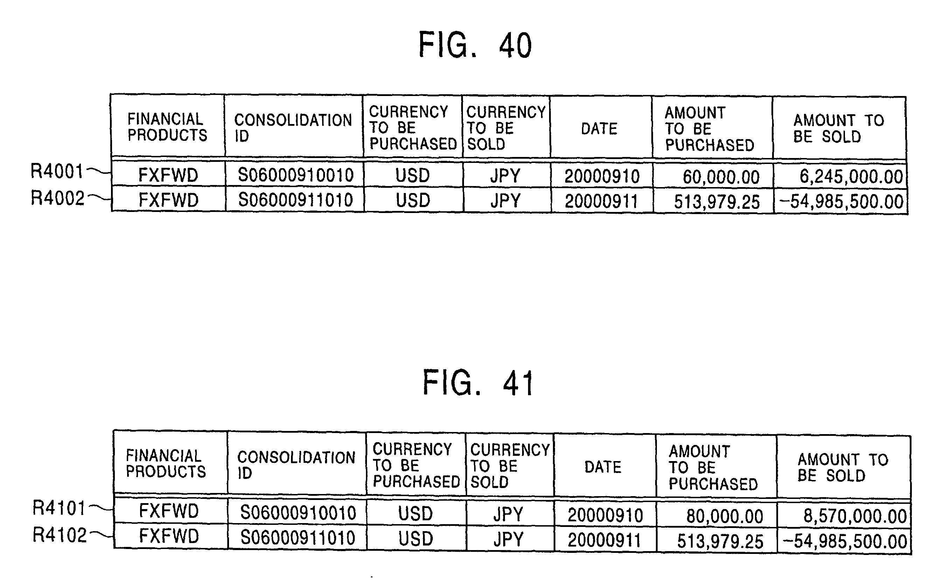

Fig. 40 shows consolidated exchange reservation information produced in the case where the processing reference date is August 27, 2000. In this case, three records R3701, R3702, and R3703 are produced by the purchase/selling amount calculation unit 3402, and these three records are subjected to the consolidation process. As a result, the resultant consolidated exchange reservation information includes a record R4001 obtained by consolidating the records R3701 and R3703 and also includes a record R4002 obtained by consolidating the record R3702.

Fig. 41 shows consolidated exchange reservation information produced in the case where the processing reference date is September 2, 2000. In this case, four records R3701, R3702, R3703, and R3704 are produced by the purchase/selling amount calculation unit 3402, and these four records are subjected to the consolidation process. As a result, the resultant consolidated exchange reservation information includes a record R4101 obtained by consolidating the records R3701, R3703, and R3704 and also includes a record R4102 obtained by consolidating the record R3702.

The produced consolidated exchange reservation information records are stored as consolidated exchange reservation data in the consolidated exchange reservation data storage unit 3403, and the consolidated exchange reservation data is supplied to the risk management system 3 as required. Preferably, the consolidated records are produced in a format that satisfies the specifications of the risk management system 3. In the case where the format of the consolidated exchange, reservation data does not satisfy the specifications, the consolidated exchange reservation data is supplied to the risk management system 3 after converting the format via interface means (not shown) into a format that satisfies the specifications of the risk management system 3.

Thus, consolidated exchange reservation data is produced so as to indicate cash flows in Japanese and foreign currencies, which will occur in the future (on the expiration dates). The number of records of the consolidated data and the data size thereof are much smaller than those of the original transaction information. By using such consolidated data, it becomes possible for the risk management system to manage a very large number of cash flows including those associated with retail transactions.

### (3. Card loan transaction information consolidating unit)

Now, the card loan transaction information consolidating unit 28 is described below.

### (3.1 Example of the construction)

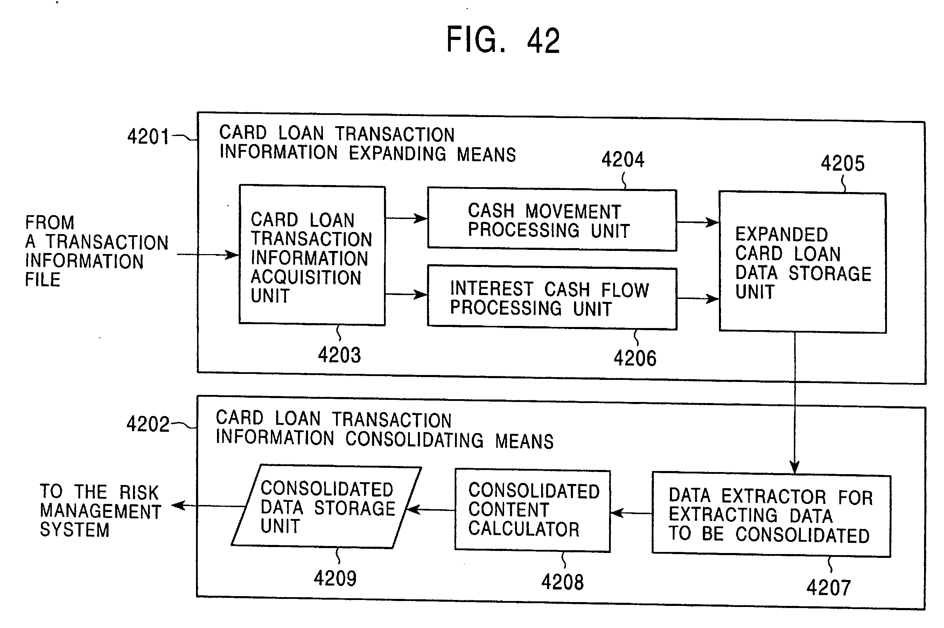

Referring to Fig. 42, an example of the construction of the card loan transaction information consolidating unit 28 for consolidating transaction information stored in the card load ledger file 23 is described below.

As shown in Fig. 42, the card loan transaction information consolidating unit 28 includes a card loan transaction information expanding means (hereinafter, referred to as CLTI expanding means) 4201, and card loan transaction information consolidating means (hereinafter, referred to as ALTI consolidating means) 4202.

The CLTI expanding means 4201 receives card loan transaction data from the card load ledger file 23, produces expanded card loan data on the basis of the received card loan transaction data, and outputs the produced expanded card loan data. The ALTI consolidating means 4202 receives the expanded card loan data from the CLTI expanding means 4201, produces consolidated card loan data on the basis of the received expanded card loan data, and outputs the produced consolidated card loan data to the risk management system 3.

As shown in Fig. 42, the CLTI expanding means 4201 includes a card loan transaction information acquisition unit 4203 connected to the card load ledger file 23, a cash movement processing unit 4204 connected to the card loan transaction information acquisition unit 4203, an interest cash flow processing unit 4206 also connected to the card loan transaction information acquisition unit 4203, and an expanded data storage unit 4205 connected to the cash movement processing unit 4204 and the interest cash flow processing unit 4206.

The transaction information acquisition unit 4203 acquires data, needed for calculation of monetary movement, from the card load ledger file 23 on a record-by-record basis. Each record of the card load ledger file 23 includes fields for describing an account number, an interest rate, a contracted repayment date, an amount of each repayment, an amount of principal repaid, an amount of interest repaid, an outstanding loan balance, a balance-days product as of the next repayment date, an amount of interest to be repaid on the next repayment date, a next repayment date, and the date last updated. The transaction information acquisition unit 4203 reads necessary data on a record-by-record basis and supplies the data to the cash movement processing unit 4204 and the interest cash flow processing unit 4206.

The cash movement processing unit 4204 produces an expanded card loan record by describing movements of a principal interest which occur on a processing reference date and a loan balance as of the processing reference date are described, on the basis of the data acquired, by the transaction information acquisition unit 4203, from each record of the card load ledger file 23.

The interest cash flow processing unit 4206 calculates, on the basis of the data acquired by the transaction information acquisition unit 4203, the amounts of a principal and interest as of a next contracted repayment date for each record of the card load ledger file 23, stores the calculated values in an expanded record, and supplies the resultant expanded record to the expanded card loan data storage unit 4205.

The expanded card loan data storage unit 4205 stores, as expanded card loan data, the records supplied from the cash movement processing unit 4204 and the interest cash flow processing unit 4206. When the card loan transaction information expanding means 4201 has finished the processing for all records of the card load ledger file 23, the expanded card loan data is completed.

The card loan transaction information consolidating means 4202 includes an information-to-be-consolidated extracting unit 4207 connected to the expanded card loan data storage unit 4205, a consolidated-content calculation unit 4208 connected to the information-to-be-consolidated extracting unit 4207, and a consolidated card loan data storage unit 4209 connected to the consolidated-content calculation unit 4208.

The information-to-be-consolidated extracting unit 4207 extracts records, which can be consolidated into groups, from the expanded card loan data stored in the expanded card loan data storage unit 4205. The consolidation is performed such that expanded records having the same CF occurrence date are grouped together and stored into one record. The consolidation can be performed, for example, by sorting the expanded records using the date of occurrence of cash flow as a key and grouping the sorted records such that records which are different in the date of occurrence of cash flow fall into different groups.

If the consolidated-content calculation unit 4208 receives the grouped records from the information-to-be-consolidated extracting unit 4207, the consolidated-content calculation unit 4208 calculates the sum of the amounts of principals, the sum of interest, and the sum of deposit balances for each group, and stores the calculated sums for each group into one consolidated record. The resultant consolidated records are supplied to the consolidated card loan data storage unit 4209. As for records that cannot be grouped, one consolidated record is produced for each such expanded record without calculating the sums, and the resultant consolidated records are supplied to the consolidated card loan data storage unit 4209.

When all groups have been processed, consolidated card loan data including a complete set of consolidated records is obtained. The consolidated card loan data storage unit 4209 stores the completed consolidated card loan data and supplies it to the risk management system 3.

Preferably, the consolidated records are produced in a format that satisfies the specifications of the risk management system 3. In the case where the format of the consolidated card loan data does not satisfy the specifications, the consolidated card loan data is supplied to the risk management system 3 after converting the format via interface means (not shown) into a format that satisfies the specifications of the risk management system 3.

### (3.2 Example of operation)

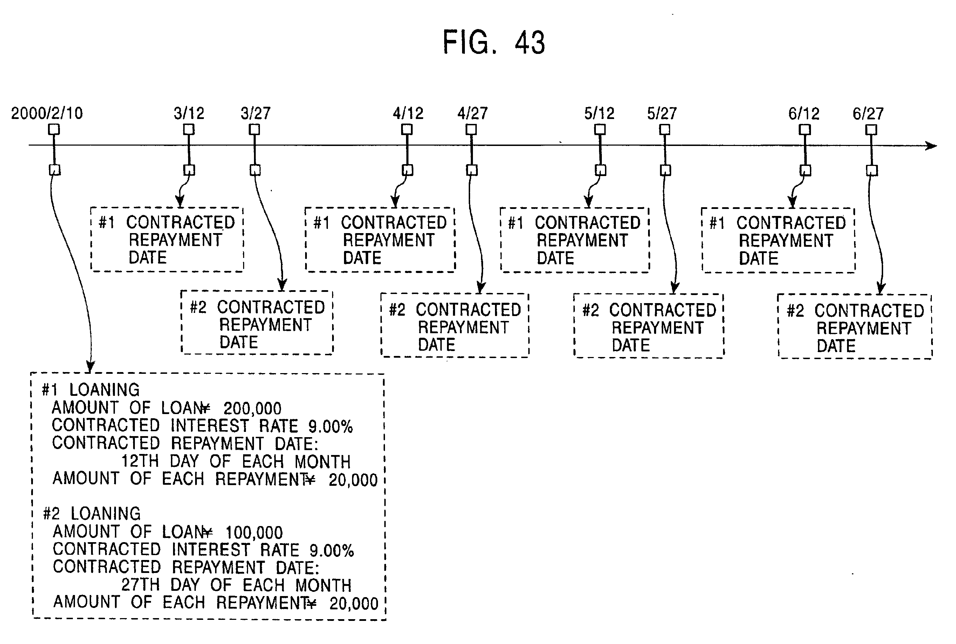

Referring to Fig. 43 showing an example of card loan transaction, an example of the operation of the card loan transaction information consolidating unit 28 is described below. Fig. 43 is a diagram showing an example of a scenario of card loan transactions. In this scenario, on February 10, 2000, a card loan occurs in a loan account #1 under contract conditions of the amount of 200,000 yen, an interest rate of 9.00%, a repayment date of 12th day of each month, and the amount of each repayment of 20,000 yen. On the same day, a card loan occurs in a loan account #2 under contract conditions of the amount of 100,000 yen, an interest rate of 9.00%, a repayment date of 27th day of each month, and the amount of each repayment of 20,000 yen. Thereafter, in this scenario, repayment from the loan account #1 is performed on the 12th day of each month, and repayment from the loan account #2 is performed on the 27th day of each month.

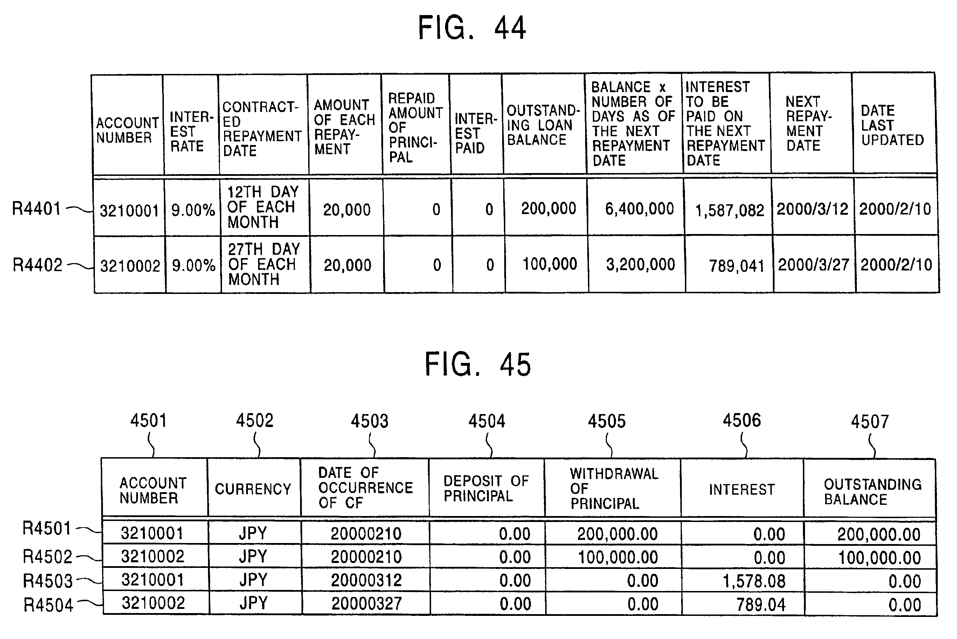

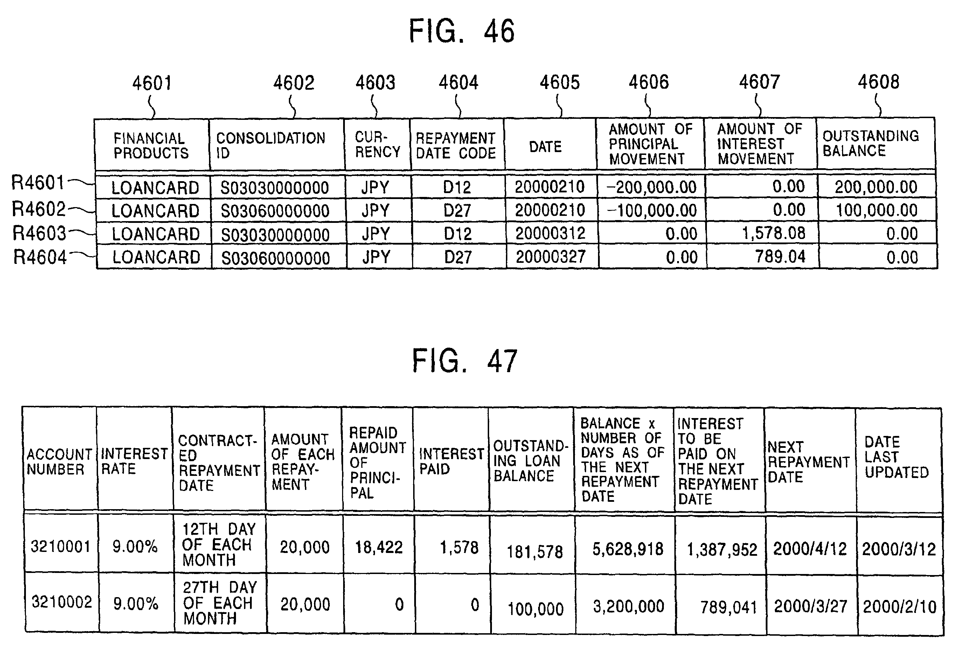

Fig. 44 is a conceptual diagram showing an example of transaction information stored in the card load ledger file 23 as of February 10, 2000. Fig. 45 is a diagram showing expanded card loan data produced by the CLTI expanding means 4201 on February 10, 2000, and Fig. 46 is a diagram showing consolidated card loan data produced by the ALTI consolidating means 4202 on the same day.

In this example, the expanded data shown in Fig. 45 includes a plurality of expanded records R4501, R4502, R4503, and R4504, wherein each record includes an account number field 4501, a currency type field 4502, a CF occurrence date field 4503 a deposited principal field 4504, a withdrawn principal field 4505, a paid interest field 4506, and an outstanding balance field 4507.

The consolidated card loan data includes a plurality of consolidated records R4601, R4602, R4603, and R4604, wherein each consolidated record includes a financial product field 4601, a consolidation ID field 4602, a currency type field 4603, a transaction code field 4604, a date field 4605, a principal movement field 4606, an interest movement field 4607, and an outstanding balance field 4608. In the financial product field, there is described a code identifying a corresponding financial product. The consolidation ID is an identifier identifying the consolidated card loan data.

First, the transaction information acquisition unit 4203 acquires data such as that shown in Fig. 44 from the card load ledger file 23.

The cash movement processing unit 4204 detects, from the data acquired by the card loan transaction information acquisition unit 4203, that a loan of 200,000 yen has occurred in the account #1. In response to the detection, the cash movement processing unit 4204 produces an expanded record R4501. Similarly, the cash movement processing unit 4204 detects an occurrence of a loan of 100,000 yen in the account #2 and produces an expanded record R4502. Data in the fields of the respective records are described by the cash movement processing unit 4202.

The interest cash flow processing unit 4206 produces an expanded record R4503 in which a next repayment date of the account #1 is described and also produces an expanded record R4504 in which a next repayment date of the account #2 is described. The amount of interest may be described in the record by putting a value calculated by the interest cash flow processing unit into the record. Alternatively, the card loan transaction information acquisition unit 4203 may acquire the amount of interest from the ledger file such as that shown in Fig. 44, and the acquired value may be copied into the record by the interest cash flow processing unit.

The expanded records R4501 to R4504 produced in the above-described manner are supplied from the processing units 4204 and 4206 to the expanded data storage unit 4205 and stored therein.

In the ALTI consolidating means 4202, the information-to-be-consolidated extracting unit 4207 extracts expanded data, which can be consolidated into groups, from the expanded data stored in the expanded card loan data storage unit 4205. In this example, the ALTI consolidating means performs grouping such that expanded records having the same CF occurrence date, the same currency type, and the same repayment date are grouped together. In the present scenario, there are no expanded records which satisfy the above condition. Thus, the information-to-be-consolidated extracting unit 4207 does not perform the grouping and the consolidated-content calculation unit 4208 produces consolidated records R4601, R4603, R4602, and R4604 corresponding to respective expanded records R4501, R4502, R4503, and R4504. As a result, consolidated card loan data such as that shown in Fig. 46 is obtained. However, in a case where a plurality of records are consolidated into one consolidated record, the consolidated-content calculation unit 4208 calculates the sum of movements of principals and the sum of movements of interest and describes the calculated sums in the principal movement field 4606, the interest movement field 4607, and the outstanding balance field 4608, respectively, of the consolidated record.

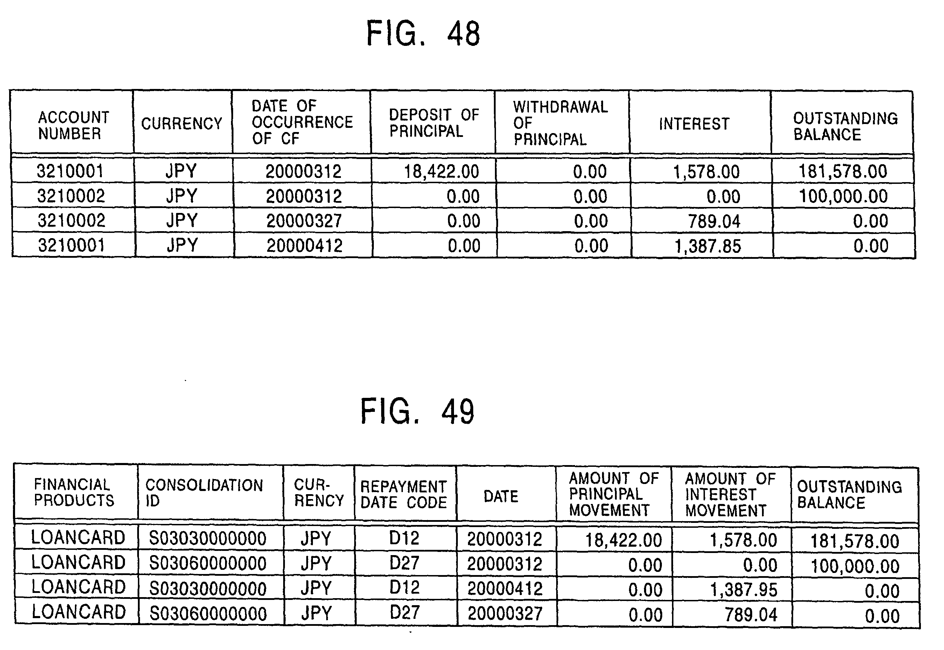

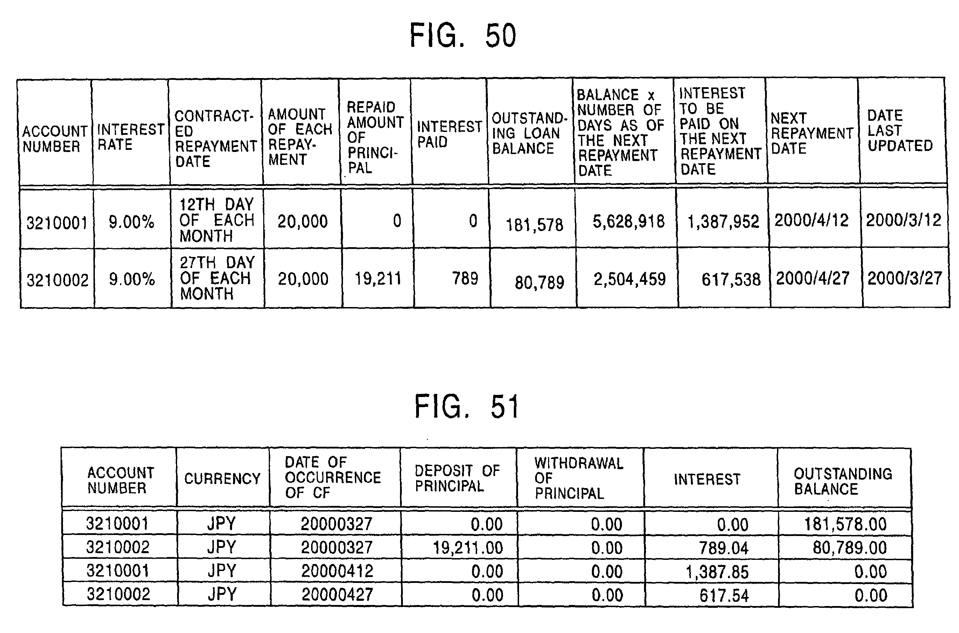

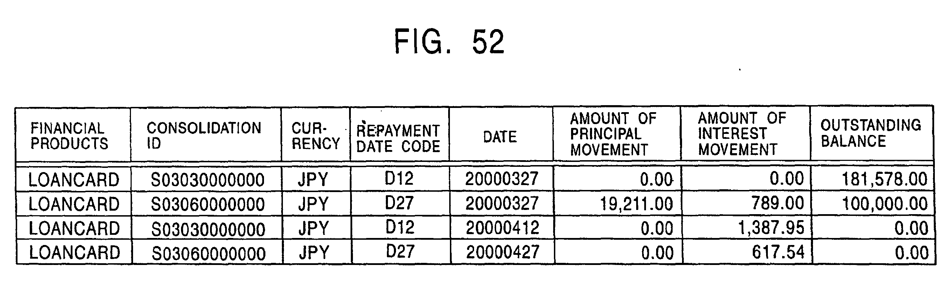

When a contracted repayment date is arrived at, the CLTI expanding means 4201 produces expanded data and the ALTI consolidating means 4202 produces consolidated card loan data on the basis of the expanded data. Fig. 47 is a conceptual diagram showing an example of transaction information stored in the card load ledger file 23 as of March 12, 2000. Fig. 48 is a diagram showing expanded data produced by the CLTI expanding means 4201 on March 12, 2000, and Fig. 49 is a diagram showing consolidated card loan data produced by the ALTI consolidating means 4202 on the same day. Fig. 50 is a conceptual diagram showing an example of transaction information stored in the card load ledger file 23 as of March 27, 2000. Fig. 51 is a diagram showing expanded data produced by the CLTI expanding means 4201 on March 27, 2000, and Fig. 52 is a diagram showing consolidated card loan data produced by the ALTI consolidating means 4202 on the same day.

Thus, consolidated card loan data is produced so as to indicate cash flows as of the card-loan calculation-base dates or cash flows which will occur in the future. The number of records of the consolidated data and the data size thereof are much smaller than those of the original transaction information. By using such consolidated data, it becomes possible for the risk management system to manage a very large number of cash flows including those associated with retail transactions.

### (4. Specific-purpose/housing loan transaction information consolidating unit)

The specific-purpose/housing loan transaction information consolidating unit 29 for consolidating transaction information associated with a specific-purpose/housing loan such as a car loan, a bridal loan, a travel loan, or a housing loan.

### (4.1 Example of construction)

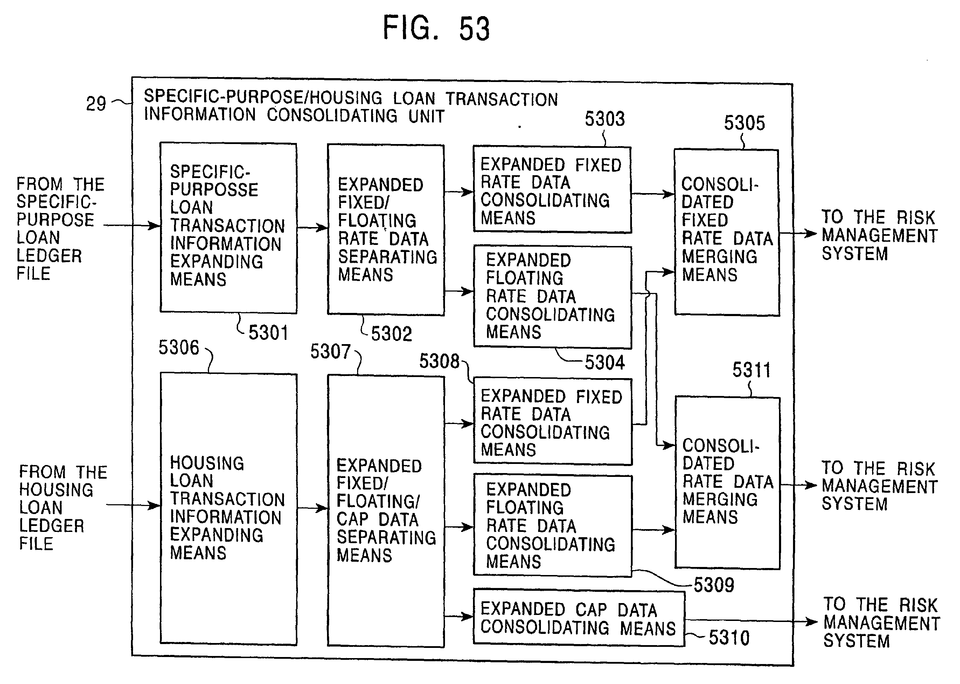

Fig. 53 is a block diagram showing an example of the construction of a specific-purpose/housing loan transaction information consolidating unit 29.

The specific-purpose/housing loan transaction information consolidating unit 29 includes specific-purpose loan transaction information expanding means 5301 for consolidating specific-purpose loan transaction information, expanded fixed/floating rate data separating means 5302, expanded fixed-rate data consolidating means 5303, and expanded floating-rate data consolidating means 5304, and also includes housing loan transaction information expanding means 5306 for consolidating housing loan transaction information, expanded fixed-rate/floating-rate/cap data separating means 5307, expanded fixed-rate data consolidating means 5308, expanded floating-rate data consolidating means 5309, and cap data consolidating means 5310. The specific-purpose/housing loan transaction information consolidating unit 29 further includes consolidated fixed-interest-rate data merging means 5305 and consolidated varying-interest-rate data merging means 5311.

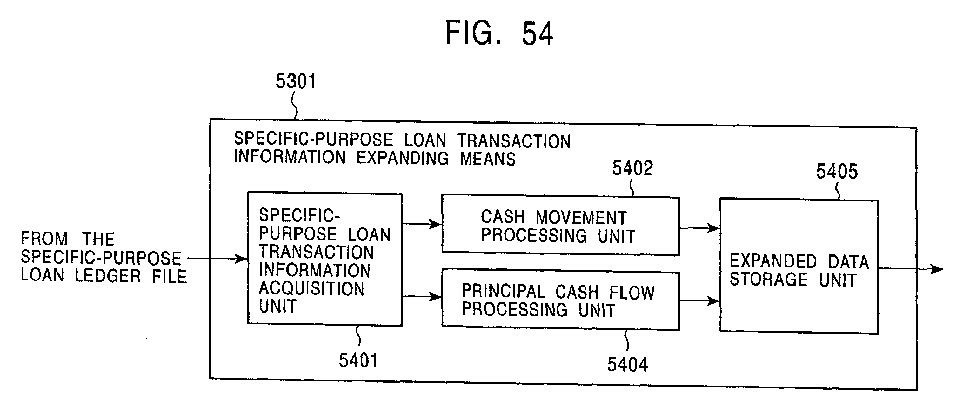

The specific-purpose loan data expanding means 5301 receives specific-purpose transaction data from the specific-purpose load ledger file 24, produces expanded specific-purpose loan data on the basis of the received specific-purpose transaction data, and outputs the produced expanded specific-purpose loan data. Fig. 54 is a block diagram showing an example of the construction of the specific-purpose loan transaction information expanding means 5301. The specific-purpose loan transaction information expanding means 5301 includes a specific-purpose loan transaction information acquisition means 5401 connected to the specific-purpose load ledger file 24, a cash movement processing unit 5402 connected to the specific-purpose loan transaction information acquisition means 5401, a principal cash flow processing unit 5404 also connected to the specific-purpose loan transaction information acquisition means 5401, and an expanded data storage unit 5405 connected to the cash movement processing unit 5402 and the principal cash flow processing unit 5404.

The components of the specific-purpose loan data expanding means 5301 are similar to the of the card loan transaction information expanding means 4201 shown in Fig. 42 except that the principal cash flow processing unit 5404 produces an expanded record for each change in principal, interest, or deposit balance of each account.

The expanded fixed/floating rate data separating means 5302 outputs expanded specific-purpose loan data separately for expanded data associated with a fixed interest rate and expanded data associated with a varying interest rate.

The expanded fixed-rate data consolidating means 5303 receives expanded data associated with a fixed interest rate from the expanded fixed/floating rate data separating means 5302, produces consolidated fixed-rate specific-purpose loan data by consolidating, the expanded data associated with the fixed interest rate, and outputs the produced consolidated fixed-rate specific-purpose loan data, of the expanded specific-purpose loan data.

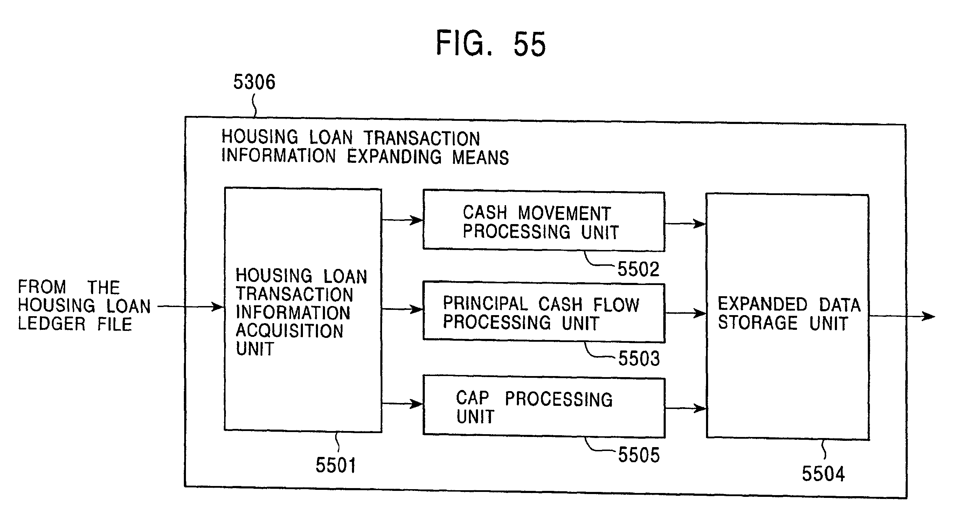

Fig. 55 is a block diagram showing an example of the construction of the housing loan transaction information expanding means 5306. The housing loan transaction information expanding means 5306 includes a housing loan transaction information acquisition unit 5501 connected to the housing load ledger file 25, a cash movement processing unit 5502, a principal cash flow processing unit 5503, a cap processing unit 5505, and an expanded data storage unit 5504 connected to the cash movement processing unit 5502, the principal cash flow processing unit 5503, and the cap processing unit 5505, wherein the cash movement processing unit 5502, the principal cash flow processing unit 5503, and the cap processing unit 5505 are connected to the housing loan transaction information acquisition unit 5501.

The housing loan data expanding means 5306 receives housing loan transaction data from the housing load ledger file 25, produces expanded housing loan data on the basis of the received housing loan transaction data, and outputs the produces the expanded housing loan data.

The components of the housing loan transaction information expanding means 5306 are similar to the corresponding components of the specific-purpose loan transaction information expanding means 5301 shown in Fig. 54, except for the cap processing unit 5505.

The expanded floating-rate data consolidating means 5304 receives expanded varying-interest-rate data from the expanded fixed/floating rate data separating means 5302, produces consolidated varying-interest-rate specific-purpose loan data by consolidating the expanded varying-interest-rate data of the expanded specific-purpose loan data, and outputs the produced consolidated varying-interest-rate specific-purpose loan data.

The expanded fixed-rate/floating-rate/cap data separating means 5307 separates the expanded housing loan data into expanded fixed-interest-rate data, expanded varying-interest-rate data, and expanded cap data, and outputs the resultant separated data.

The expanded fixed-rate data consolidating means 5308 receives the expanded fixed-interest-rate data from the expanded fixed-rate/floating-rate/cap data separating means 5307, produces consolidated fixed-rate housing loan data by consolidating the received expanded fixed-interest-rate data of the expanded housing loan data, output the produced consolidated fixed-rate housing loan data.

The expanded floating-rate data consolidating means 5309 receives the expanded varying-interest-rate data from the expanded fixed-rate/floating-rate/cap data separating means 5307, produces consolidated floating-rate housing loan data by consolidating the expanded varying-interest-rate data of the expanded housing loan data, and outputs the produced consolidated floating-rate housing loan data.

The cap data consolidating means 5310 receives the expanded cap data from the expanded fixed-rate/floating-rate/cap data separating means 5307, produces consolidated cap data by consolidating the received expanded cap data of the expanded housing loan data, and supplies the produced consolidated cap data to the risk management system 3.

The consolidated fixed-interest-rate data merging means 5305 receives expanded fixed-interest-rate data from the expanded fixed-rate data consolidating means 5303 and the expanded fixed-rate data consolidating means 5308, consolidates them into one consolidated fixed-interest-rate data, and supplies the resultant consolidated fixed-interest-rate data to the risk management system 3.

The consolidated varying-interest-rate data merging means 5311 receives the expanded varying-interest-rate data from the expanded floating-rate data consolidating means 5304 and the expanded floating-rate data consolidating means 5309, consolidating them into one consolidated varying-interest-rate data, and supplies the resultant consolidated varying-interest-rate data to the risk management system 3.

### (4.2 Example of operation of the specific-purpose/housing loan transaction information consolidating unit)

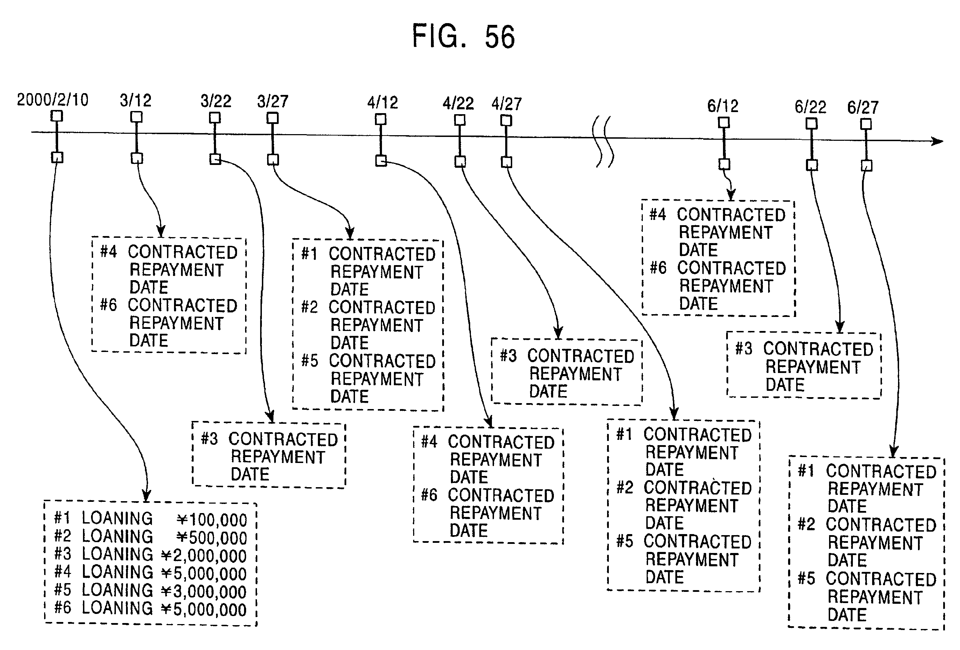

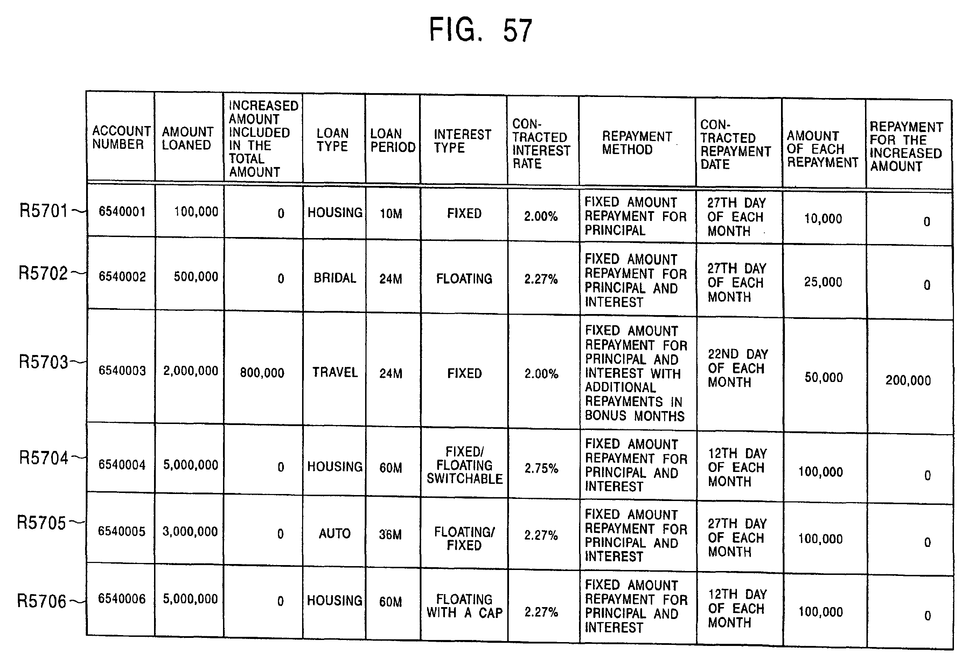

Referring to Fig. 56 showing an example of specific-purpose/housing loan transaction, an example of the operation of the specific-purpose/housing loan transaction information consolidating unit 29 is described below. Fig. 56 is a diagram showing an example of a scenario of specific-purpose/housing loan transactions. In this scenario, loan accounts #1 to #6 are opened on February 10, 2000, under contract conditions shown in Fig. 57, and agreed amounts are repaid from the respective accounts on contracted repayment days of each month.

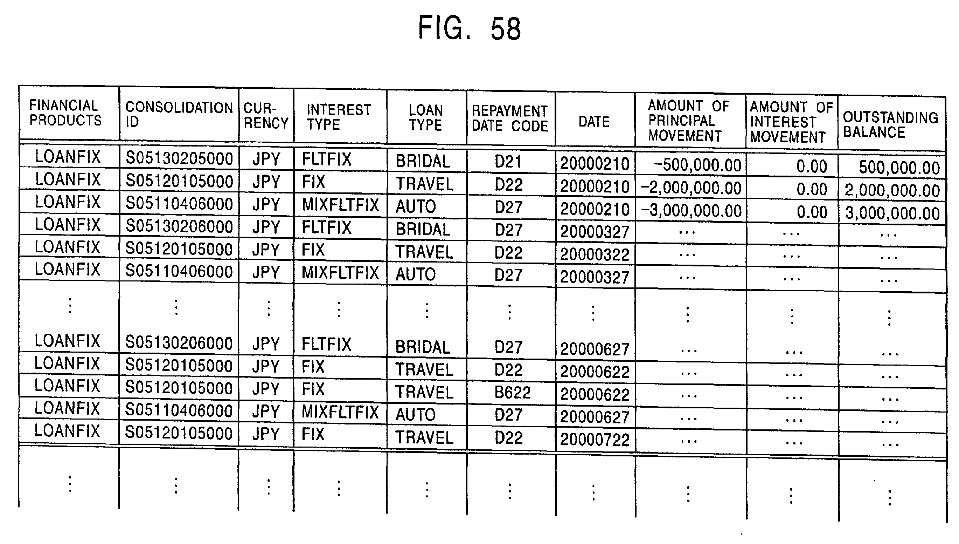

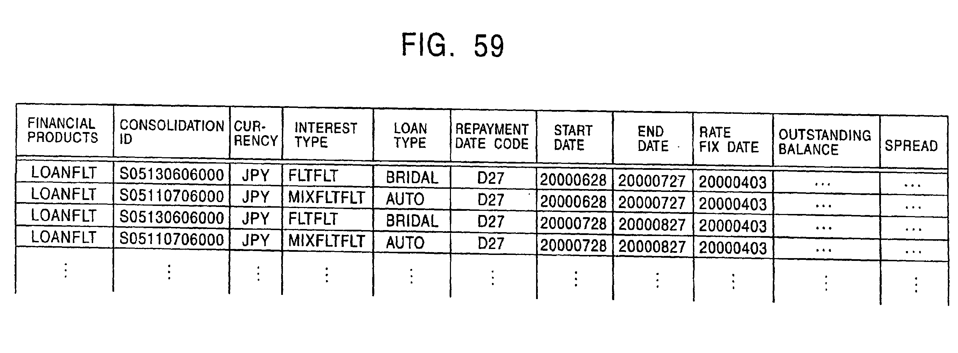

As shown in Fig. 57, the specific-purpose load ledger file 24 includes records R5702, R5703, and R5705 associated with the respective accounts #2, #3, and #5. The specific-purpose loan transaction information expanding means 5301 acquires these records and produces, from the acquired records, expanded fixed-interest-rate data and expanded varying-interest-rate data. The produced expanded data are separated by the separating means 5302 into the expanded fixed-interest-rate data and the expanded varying-interest-rate data, and supplied to the expanded fixed-rate data consolidating means 5303 and the expanded floating-rate data consolidating means 5304, respectively. Fig. 58 shows the expanded fixed-interest-rate data supplied from the separating means 5302 to the expanded fixed-rate data consolidating means 5303, and Fig. 59 shows the expanded varying-interest-rate data supplied from the separating means 5302 to the expanded floating-rate data consolidating means 5304.

The expanded fixed-rate data consolidating means 5303 and the expanded floating-rate data consolidating means 5304 consolidate the records of the respective expanded data into groups in accordance with the repayment dates and the additional bonus repayments, and produce consolidated data by calculating the sums of records of each group in terms of the principals, the interest, and the outstanding balances.

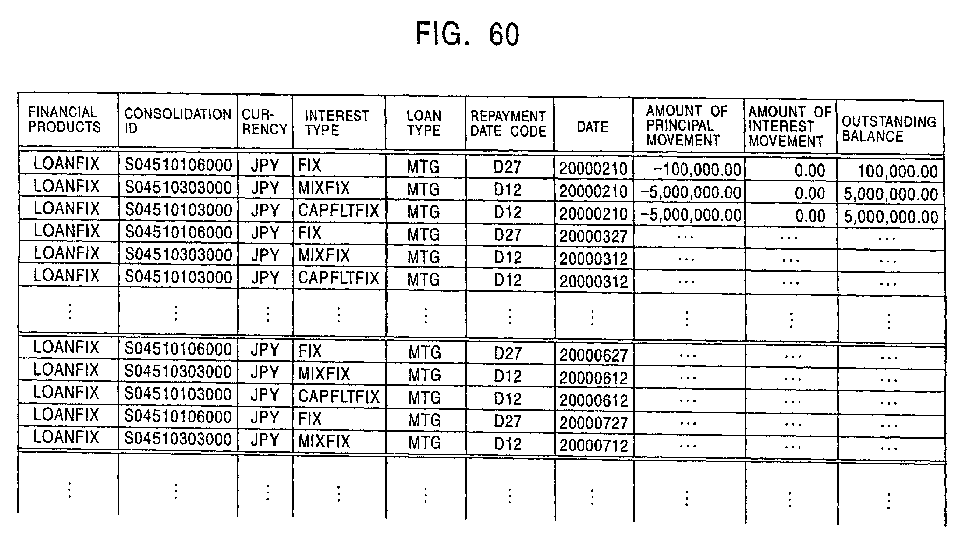

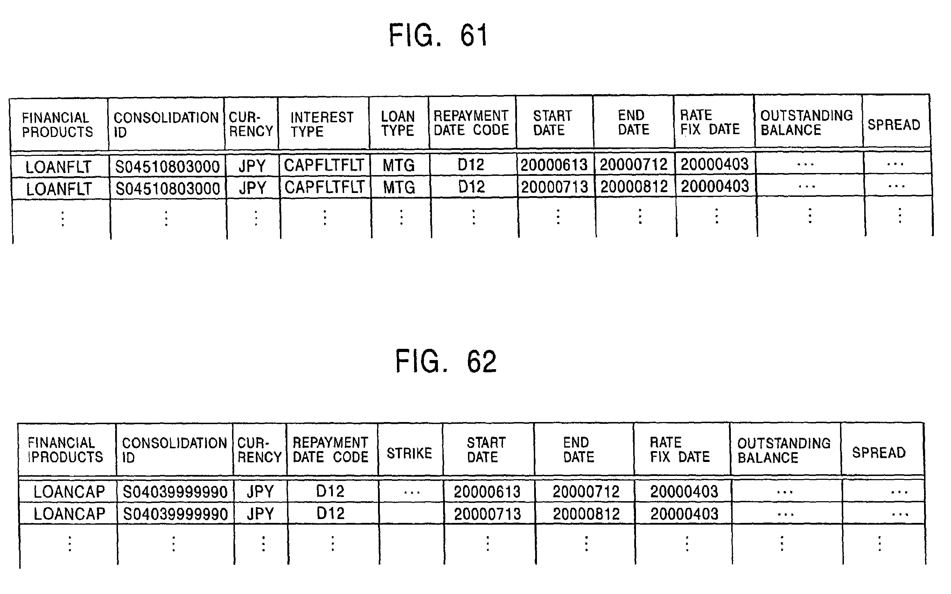

On the other hand, as shown in Fig. 57, the housing load ledger file 25 records R5701, R5704, R5706 associated with the accounts #1, #4, and #6. The housing loan transaction information expanding means 5306 acquires these records and produces, from the acquired records, expanded fixed-interest-rate data, expanded varying-interest-rate data, and expanded cap data. The produced expanded data are separated by the separating means 5307 into expanded fixed-interest-rate data, expanded varying-interest-rate data, and expanded cap data, and supplied to the expanded fixed-rate data consolidating means 5308, the expanded floating-rate data consolidating means 5309, and the cap data consolidating means 5310, respectively. Fig. 60 shows the expanded fixed-interest-rate data supplied from the separating means 5307 to the expanded fixed-rate data consolidating means 5308. Fig. 61 shows the expanded varying-interest-rate data supplied from the separating means 5307 to the expanded floating-rate data consolidating means 5309, and Fig. 62 shows the expanded cap data supplied from the separating means 5307 to the cap data consolidating means 5310.

The expanded fixed-rate data consolidating means 5308 and the expanded floating-rate data consolidating means 5309 consolidate the records of the respective expanded data into groups in accordance with the repayment dates and the additional bonus repayments, and produce consolidated data by calculating the sums of records of each group in terms of the principals, the interest, and the outstanding balances.

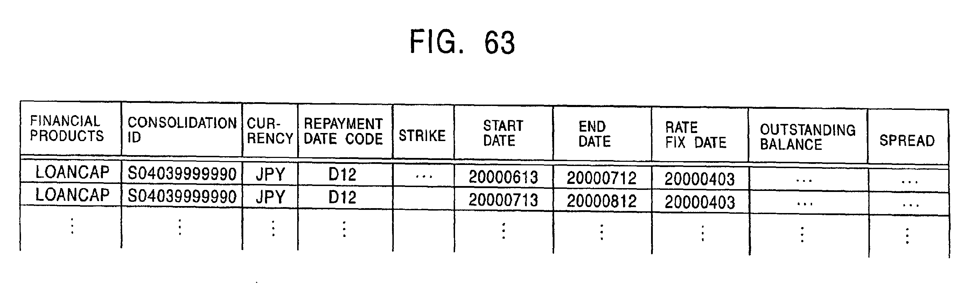

The cap data consolidating means 5310 groups the records of the expanded data in accordance with the repayment dates and the strikes and produces consolidated data by calculating the sums outstanding balances of records of each group. Fig. 63 shows an example of consolidated data produced by the cap data consolidating means 5310.

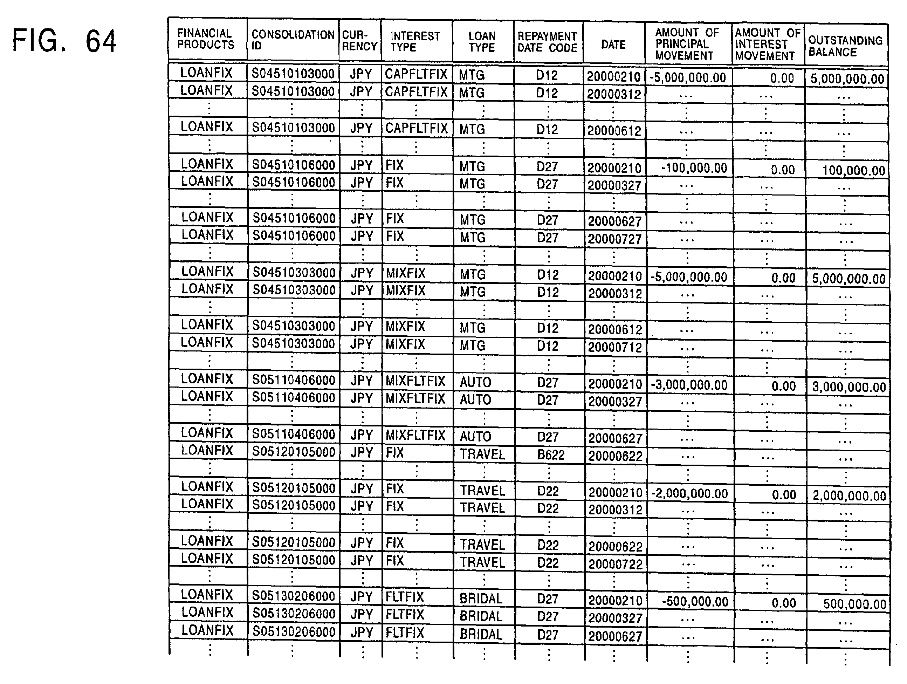

The consolidated fixed-interest-rate data merging means 5305 receives consolidated fixed-interest-rate data from the expanded fixed-rate data consolidating means 5303 and the expanded fixed-rate data consolidating means 5308, consolidating them into one consolidated fixed-interest-rate data, and supplies the resultant consolidated fixed-interest-rate data to the risk management system 3. Fig. 64 shows the consolidated fixed-interest-rate data produced by the consolidated fixed-interest-rate data merging means 5305 and supplied to the risk management system 3. Thus, via the above process, the consolidated data indicating the cash flows associated with the fixed-interest-rate specific-purpose loan and housing loan is produced and supplied to the risk management system 3.

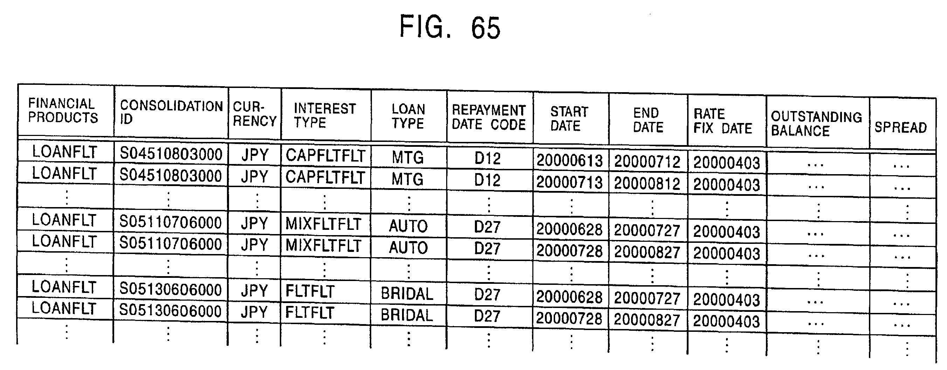

Similarly, the consolidated varying-interest-rate data merging means 5311 receives the consolidated varying-interest-rate data from the expanded floating-rate data consolidating means 5304 and the expanded floating-rate data consolidating means 5309, merges them into one consolidated fixed-interest-rate data, and supplies the resultant consolidated fixed-interest-rate data to the risk management system 3. Fig. 65 shows the consolidated varying-interest-rate data produced by the consolidated varying-interest-rate data merging means 5311 and supplied to the risk management system 3. Thus, via the above process, the consolidated data indicating the cash flows associated with the varying-interest-rate specific-purpose loan and housing loan is produced and supplied to the risk management system 3.

As described above, the present invention makes it possible to produce consolidated data precisely indicating cash flows associated with ordinary deposits, time deposits, and various types of loans, regardless of the currency type, and supply the resultant data to the risk management system.

## Claims

1. An apparatus for consolidating financial transaction information, serving to produce consolidated transaction information for use in risk management from transaction information stored in a transaction information storage apparatus and supply the resultant consolidated transaction information to a risk management system, wherein said apparatus acquires transaction information from the transaction information storage apparatus; produces expanded records indicating an occurrence of a monetary movement on the basis of the transaction information; groups the expanded records in accordance with a predetermined consolidation rule; and produces a consolidated record from a plurality of expanded records of each group.

2. An apparatus according to Claim 1, wherein said apparatus includes a transaction information consolidating unit provided for each ledger file stored in the transaction information storage apparatus, and each transaction information consolidating unit has said predetermined consolidation rule depending on a feature of a financial product stored in a corresponding ledger file.

3. An apparatus according to Claim 2, wherein the transaction information consolidating unit includes transaction information expanding means for producing expanded records in which a movement date and a movement amount of at least one of a principal, interest, and an outstanding balance are described; and transaction information consolidating means for producing a consolidated record by grouping the expanded records in accordance with a consolidation rule, and summing up the grouped expanded records in terms of at least one of items including a principal, interest, and an outstanding balance.

4. An apparatus according to Claim 3, wherein the transaction information expanding means includes a transaction information acquisition unit connected to a ledger file; a cash movement processing unit and a cash flow processing unit both connected to the transaction information acquisition unit; and an expanded data storage unit connected to the cash movement processing unit and the cash flow processing unit, the cash movement processing unit serving to produce an expanded record for each record of the ledger file such that movements of principals and interest which have occurred on a processing reference date are described in the expanded record on the basis of data acquired by the transaction information acquisition unit, the cash flow processing unit serving to calculate interest to be paid on a next interest payment date for each record of the ledger file on the basis of data acquired by the transaction information acquisition unit, storing the calculated interest in an expanded record, and supplying the resultant expanded record to the expanded data storage unit.

5. An apparatus according to Claim 3, wherein the transaction information consolidating means includes an information-to-be-consolidated extracting unit connected to the output of the transaction information expanding means; a consolidated-content calculation unit connected to the information-to-be-consolidated extracting unit; and a consolidated data storage unit connected to the consolidated-content calculation unit, the information-to-be-consolidated extracting unit serving to receive expanded records from the transaction information expanding means and group the received expanded records in accordance with a predetermined consolidation rule, the consolidated-content calculation unit serving to receive the grouped expanded records from the information-to-be-consolidated extracting unit, calculate the sum of at least one of items including principal movement, interest movement, a next interest payment date, and an outstanding balance for each group, store the calculated sum in one consolidated record, and supply the resultant consolidated record to the consolidated data storage unit.

6. A method for consolidating financial transaction information by producing consolidated transaction information for use in risk management from transaction information stored in a transaction information storage apparatus and supplying the resultant consolidated transaction information to a risk management system, the method comprising an expanded record producing step of acquiring transaction information from the transaction information storage apparatus and producing an expanded record on the basis of the acquired transaction information so as to indicate a change in at least one of a principal, interest, and an outstanding balance; and a consolidated record producing step of grouping expanded records in accordance with a predetermined consolidation rule and producing one consolidated record from a plurality of expanded records of the same group.

7. A method according to Claim 6, wherein the expanded record producing step includes the steps of producing a first expanded record in which movements of a principal and interest which have occurred on a processing reference date are described on the basis of transaction information; and producing a second expanded record in which an amount of movement of at lest one of a principal, interest, and an outstanding balance predicted to occur after the processing reference date is described.

8. A method according to Claim 6, wherein the consolidated record producing step includes the steps of grouping the expanded records in accordance with a predetermined consolidation rule; calculating the sum of at least one of items including a principal movement, an interest movement, a next interest payment date, and an outstanding balance for each group and storing the calculated sum in one consolidated record.

9. An information storage medium including a program stored therein for causing a computer to function as an apparatus according to one of Claims 1 to 5.

10. A program for causing a computer to function as an apparatus according to one of Claims 1 to 5.

11. A computer-readable storage medium including a program stored therein for causing a computer to practice a method according to one of Claims 6 to 8.

12. A program for causing a computer to practice a method according to one of Claims 6 to 8.
